(19) Europäisches Patentamt
European Patent Office
Office européen des brevets

(11) **EP 2 744 163 B1**

(12) **EUROPEAN PATENT SPECIFICATION**

(45) Date of publication and mention
of the grant of the patent:
**09.01.2019 Bulletin 2019/02**

(21) Application number: **12822326.0**

(22) Date of filing: **10.08.2012**

(51) Int Cl.:
*H04L 1/00* (2006.01)     *H04L 5/00* (2006.01)

(86) International application number:
**PCT/KR2012/006377**

(87) International publication number:
**WO 2013/022301 (14.02.2013 Gazette 2013/07)**

(54) **METHOD AND APPARATUS FOR TRANSMITTING UPLINK CONTROL INFORMATION IN WIRELESS ACCESS SYSTEM**

VERFAHREN UND VORRICHTUNG ZUM SENDEN VON UPLINKSTEUERINFORMATIONEN IN EINEM DRAHTLOSZUGANGSSYSTEM

PROCÉDÉ ET APPAREIL PERMETTANT DE TRANSMETTRE DES INFORMATIONS DE CONTRÔLE DE LIAISON MONTANTE DANS UN SYSTÈME D'ACCÈS SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.08.2011 US 201161521768 P**

(43) Date of publication of application:
**18.06.2014 Bulletin 2014/25**

(73) Proprietor: **LG Electronics Inc.**
**Seoul 07336 (KR)**

(72) Inventors:
• **JANG, Jiwoong**
**Anyang-si, Gyeonggi-do 431-080 (KR)**
• **CHUNG, Jaehoon**
**Anyang-si, Gyeonggi-do 431-080 (KR)**
• **KO, Hyunsoo**
**Anyang-si, Gyeonggi-do 431-080 (KR)**
• **KIM, Dongcheol**
**Anyang-si, Gyeonggi-do 431-080 (KR)**

(74) Representative: **Cabinet Plasseraud**
**66, rue de la Chaussée d'Antin**
**75440 Paris Cedex 09 (FR)**

(56) References cited:
**WO-A1-2010/148319      KR-A- 20090 086 031**
**KR-A- 20110 009 025      KR-A- 20110 036 512**
**KR-A- 20110 084 471**

• **SAMSUNG: "Further Discussion on Data and Control Multiplexing in UL MIMO Transmissions", 3GPP DRAFT; R1-104614 UL MIMO UCI AND PUSCH MUX, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Madrid, Spain; 20100823, 17 August 2010 (2010-08-17), XP050449905, [retrieved on 2010-08-17]**
• **PANASONIC: "UCI resource size on PUSCH with SU-MIMO transmission", 3GPP DRAFT; R1-104904, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Madrid, Spain; 20100823, 17 August 2010 (2010-08-17), XP050450051, [retrieved on 2010-08-17]**

## Description

[Technical Field]

The present invention relates to a wireless access system, and particularly, to methods for transmitting Uplink Control Information (UCI) on a Physical Uplink Shared Channel (PUSCH), methods for encoding the UCI, and apparatuses the same in a Carrier Aggregation (CA) environment (i.e., a multi-component carrier environment). More particularly, the present invention relates to a channel coding method for the case where only UCI is transmitted without uplink data on a PUSCH.

[Background Art]

A 3rd Generation Partnership Project Long Term Evolution (3GPP LTE: Rel-8 or Rel-9) system adopts Multi-Carrier Modulation (MCM) in which a single Component Carrier (CC) is divided into a plurality of frequency bands. On the other hand, a 3GPP LTE-Advanced system (hereinafter, referred to as an LTE-A system) may use CA by aggregating one or more CCs to support a broader system bandwidth than in the 3GPP LTE system. The term CA may be interchanged with carrier matching, multi-CC environment, or multi-carrier environment.

For a single-CC environment such as the LTE system, only multiplexing of UCI and data using a plurality of layers on one CC is specified.

In contrast, one or more CCs are available and the number of pieces of UCI may be multiplied by the number of used CCs. For example, a Rank Indication (RI) has 2-bit or 3-bit information in the LTE system. Since a total bandwidth can be extended to up to 5 CCs in the LTE-A system, the RI may have 15-bit information at maximum.

In this case, as large UCI as 15 bits cannot be transmitted in a UCI transmission scheme defined in the LTE system and cannot be encoded with a conventional Reed-Muller (RM) code. Accordingly, there exists a need for a new method for transmitting UCI having a large amount of information in the LTE-A system.

If UCI is transmitted on a PUSCH, the size of resources allocated to a Channel Quality Indication (CQI)/Precoding Matrix Index (PMI) may be very small according to the state of the uplink channel. Particularly, when only UCI is transmitted without uplink data on the PUSCH, a conventional modulation scheme for the UCI is restricted as a Quadrature Phase Shift Keying (QPSK). In this case, if all CQI/PMI information is transmitted in given insufficient resources, an actual coding rate may be decreased, making reliable UCI transmission difficult.

[Disclosure]

[Technical Problem]

An object of the present invention devised to solve the problem lies on a method for efficiently encoding and transmitting Uplink Control Information (UCI) in a Carrier Aggregation (CA) environment (or a multi-carrier environment).

Another object of the present invention is to provide a method for channel-encoding UCI, a method for allocating resources to UCI, and a method for transmitting UCI, in the case where only UCI is transmitted without data on a Physical Uplink Shared Channel (PUSCH).

It will be appreciated by persons skilled in the art that the objects that could be achieved with the present invention are not limited to what has been particularly described hereinabove and the above and other objects that the present invention could achieve will be more clearly understood from the following detailed description.

[Technical Solution]

The present invention relates to methods and apparatuses for transmitting only Uplink Control Information (UCI) including channel quality control information on a Physical Uplink Shared Channel (PUSCH) in a Carrier Aggregation (CA) environment.

In an aspect of the present invention, a method for transmitting only UCI without uplink data on the PUSCH in a wireless access system supporting CA includes receiving a Physical Downlink Control Channel (PDCCH) signal including Downlink Control Information (DCI) format 4 from a Base Station (BS), allocating resources for transmitting the UCI based on the DCI format 4, calculating the number of code symbols for transmitting the UCI, channel-encoding the UCI, and transmitting only the channel-encoded UCI without the uplink data on the PUSCH to the BS.

In another aspect of the present invention, a User Equipment (UE) for transmitting only Uplink Control Information (UCI) without uplink data in a wireless access system supporting CA includes a reception module, a transmission module, and a processor configured to support transmission of only the UCI on the PUSCH.

The UE may receive a PDCCH signal including DCI format 4 from a BS through the reception module, may allocate resources for transmitting the UCI based on the DCI format 4, calculate the number of code symbols for transmitting the UCI, and channel-encode the UCI, through the processor, and may transmit only the channel-encoded UCI without the uplink data on the PUSCH to the BS through the transmission module.

In the aspects of the present invention, the number of Resource Blocks (RBs) as the resources allocated for transmitting the UCI may be changed according to a modulation order. Herein, the number of RBs may be inversely proportional to the number of bits per modulation symbol according to a modulation order.

In the one aspect of the present invention, the method may further include setting a maximum number of RBs as the resources allocated for transmitting the UCI.

In the one aspect of the present invention, the method may further include determining a modulation order for transmitting the UCI based on the DCI format 4. The modulation order may be fixed. The modulation order may be Quadrature Phase Shift Keying (QPSK) or 16-ary Quadrature Amplitude Modulation (16QAM).

In the aspects of the present invention, Channel State Information (CSI) may be restricted according to a type of control information included in the UCI.

For example, a serving cell for which CSI has been reported to the BS most recently from among two or more serving cells is excluded from CSI reporting. Or only CSI for a part of two or more serving cells may be reported according to priority levels of the serving cells.

The afore-described aspects of the present invention are merely a part of preferred embodiments of the present invention. Those skilled in the art will derive and understand various embodiments reflecting the technical features of the present invention from the following detailed description of the present invention.

[Advantageous Effects]

The embodiments of the present invention have the following effects.

First, Uplink Control Information (UCI) can be efficiently encoded and transmitted in a Carrier Aggregation (CA) environment (or a multi-carrier environment).

Secondly, when only UCI is transmitted without data on a Physical Uplink Shared Channel (PUSCH), a method for channel-encoding UCI, a method for allocating resources to UCI, and a method for transmitting UCI can be provided.

Thirdly, when only UCI is transmitted without data on a PUSCH, an actual coding rate can be less decreased and the UCI can be transmitted reliably, even though the UCI is transmitted in limited resources due to a CA environment.

It will be appreciated by persons skilled in the art that that the effects that can be achieved through the present invention are not limited to what has been particularly described hereinabove and other advantages of the present invention will be more clearly understood from the following detailed description.

[Description of Drawings]

The accompanying drawings, which are included to provide a further understanding of the invention, illustrate embodiments of the invention and together with the description serve to explain the principle of the invention.

In the drawings:

Fig. 1 illustrates physical channels and a general signal transmission method using the physical channels in a 3rd Generation Partnership Project Long Term Evolution (3GPP LTE) system;

Fig. 2 illustrates a configuration of a User Equipment (UE) and a signal processing operation to transmit an uplink signal in the UE;

Fig. 3 illustrates a configuration of a Base Station (BS) and a signal processing operation to transmit a downlink signal in the BS;

Fig. 4 illustrates a configuration of a UE and Single Carrier-Frequency Division Multiple Access (SC-FDMA) and Orthogonal Frequency Division Multiple Access (OFDMA) schemes;

Fig. 5 illustrates frequency-domain signal mapping methods that satisfy a single carrier property in the frequency domain;

Fig. 6 is a block diagram illustrating an operation for transmitting a Reference Signal (RS) for use in demodulating an SC-FDMA transmission signal;

Fig. 7 illustrates the positions of symbols to which RSs are mapped in an SC-FDMA subframe structure;

Fig. 8 illustrates a signal processing operation for mapping Discrete Fourier Transform (DFT) output samples to a single carrier in clustered SC-FDMA;

Figs. 9 and 10 illustrate signal processing operations for mapping DFT output samples to multiple carriers in clustered SC-FDMA;

Fig. 11 illustrates a signal processing operation in segmented SC-FDMA;

Fig. 12 illustrates an exemplary uplink subframe structure that can be used in embodiments of the present invention;

Fig. 13 illustrates an exemplary operation for processing UpLink-Shared Channel (UL-SCH) data and control information that can be used in embodiments of the present invention;

Fig. 14 illustrates an exemplary method for multiplexing UCI and UL-SCH data into a PUSCH;

Fig. 15 illustrates multiplexing of control information and UL-SCH data in a Multiple Input Multiple Output (MIMO) system;

Figs. 16 and 17 illustrate an exemplary method for multiplexing a plurality of UL-SCH transport blocks with UCI and transmitting the multiplexed signal in a UE according to an embodiment of the present invention;

Fig. 18 illustrates one of methods for mapping uplink data and UCI to physical resource elements, for transmission;

Fig. 19 illustrates one of methods for transmitting only UCI without uplink data on a Physical Uplink Shared Channel (PUSCH); and

Fig. 20 illustrates an apparatus that may implement the methods described in Figs. 1 to 19.

[Best Mode]

Embodiments of the present invention relate to methods and apparatuses for encoding and transmitting Uplink Control Information (UCI) including channel quality control information in a Carrier Aggregation (CA) environment (i.e. a multi-carrier environment). Embodiments of the present invention also provide various channel coding methods and Cyclic Redundancy Check (CRC) adding methods for the case where UCI including Channel Quality Indication/Precoding Matrix Index (CQI/PMI) information is transmitted on a Physical Uplink Shared Channel (PUSCH).

The embodiments of the present invention described below are combinations of elements and features of the present invention in specific forms. The elements or features may be considered selective unless otherwise mentioned. Each element or feature may be practiced without being combined with other elements or features. Further, an embodiment of the present invention may be constructed by combining parts of the elements and/or features. Operation orders described in embodiments of the present invention may be rearranged. Some constructions or elements of any one embodiment may be included in another embodiment and may be replaced with corresponding constructions or features of another embodiment.

In the description of the attached drawings, a detailed description of known procedures or steps of the present invention will be avoided lest it should obscure the subject matter of the present invention. In addition, procedures or steps that could be understood to those skilled in the art will not be described either.

In the embodiments of the present invention, a description has been mainly made of a data transmission and reception relationship between a Base Station (BS) and a User Equipment (UE). A BS refers to a terminal node of a network, which directly communicates with a UE. A specific operation described as being performed by the BS may be performed by an upper node of the BS.

Namely, it is apparent that, in a network comprised of a plurality of network nodes including a BS, various operations performed for communication with a UE may be performed by the BS, or network nodes other than the BS. The term 'BS' may be replaced with a fixed station, a Node B, an eNode B (eNB), an Advanced Base Station (ABS), an access point, etc.

The term terminal may be replaced with a UE, a Mobile Station (MS), a Subscriber Station (SS), a Mobile Subscriber Station (MSS), a mobile terminal, an Advanced Mobile Station (AMS), etc.

A transmitter is a fixed and/or mobile node that provides a data service or a voice service and a receiver is a fixed and/or mobile node that receives a data service or a voice service. Therefore, a UE may serve as a transmitter and a BS may serve as a receiver, on uplink. Likewise, the UE may serve as a receiver and the BS may serve as a transmitter, on downlink.

The embodiments of the present invention may be supported by standard documents disclosed for at least one of wireless access systems including an Institute of Electrical and Electronics Engineers (IEEE) 802.xx system, a 3rd Generation Partnership Project (3GPP) system, a 3GPP Long Term Evolution (LTE) system, a 3GPP LTE-Advanced (LTE-A) system, and a 3GPP2 system. In particular, the embodiments of the present invention may be supported by 3GPP TS 36.211, 3GPP TS 36.212, 3GPP TS 36.213, and 3GPP TS 36.321 documents. That is, the steps or parts, which are not described to clearly reveal the technical idea of the present invention, in the embodiments of the present invention may be explained by the above documents. All terms used in the embodiments of the present invention may be explained by the standard documents.

While the following detailed description is given under the assumption that a 3GPP LTE system and/or a 3GPP LTE-A (LTE Advanced) system is being used as mobile communication system, the description is applicable to any other mobile communication system except for specific features inherent to the 3GPP LTE and/or 3GPP LTE-A system.

Reference will now be made in detail to the preferred embodiments of the present invention with reference to the accompanying drawings. The detailed description, which will be given below with reference to the accompanying drawings, is intended to explain exemplary embodiments of the present invention, rather than to show the only embodiments that can be implemented according to the invention.

The following detailed description includes specific details in order to provide a thorough understanding of the present invention. However, it will be apparent to those skilled in the art that the present invention may be practiced without such specific details.

The embodiments of the present invention can be used for various radio access technologies such as Code Division Multiple Access (CDMA), Frequency Division Multiple Access (FDMA), Time Division Multiple Access (TDMA), Orthogonal Frequency Division Multiple Access (OFDMA), Single Carrier Frequency Division Multiple Access (SC-FDMA), etc.

CDMA may be implemented as a radio technology such as Universal Terrestrial Radio Access (UTRA) or CDMA2000. TDMA may be implemented as a radio technology such as Global System for Mobile communications (GSM)/General packet Radio Service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, Evolved UTRA (E-UTRA), etc.

UTRA is a part of Universal Mobile Telecommunications System (UMTS). 3GPP LTE is a part of Evolved UMTS (E-UMTS) using E-UTRA, and LTE-A is an evolution of 3GPP LTE. While the embodiments of the present invention are described in the context of a 3GPP LTE/LTE-A system in order to clarify the technical features of the present invention, the present invention is also applicable to an IEEE 802.16e/m system, etc.

## 1. Overview of 3GPP LTE/LTE-A System

In a wireless access system, a UE receives information from a BS on a DownLink (DL) and transmit information to the BS on an UpLink (UL). The information transmitted and received between the UE and the BS includes general data information and various types of control information. There are many physical channels according to the types/usages of information transmitted and received between the BS and the UE.

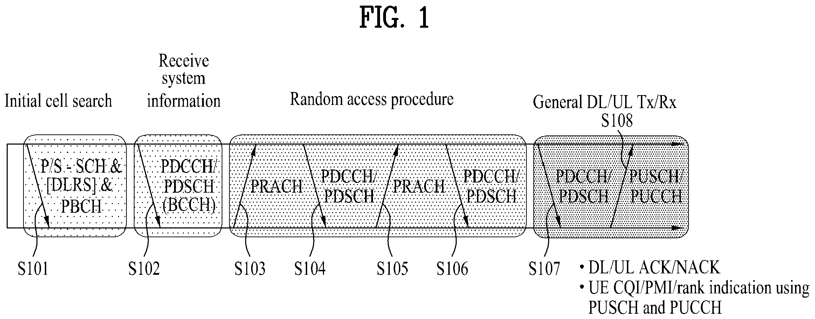

Fig. 1 illustrates physical channels and a general method for transmitting signals on the physical channels in the 3GPP system.

When a UE is powered on or enters a new cell, the UE performs initial cell search (S101). The initial cell search involves acquisition of synchronization to an eNB. Specifically, the UE synchronizes its timing to the eNB and acquires information such as a cell Identifier (ID) by receiving a Primary Synchronization Channel (P-SCH) and a Secondary Synchronization Channel (S-SCH) from the eNB.

Then the UE may acquire information broadcast in the cell by receiving a Physical Broadcast Channel (PBCH) from the eNB. During the initial cell search, the UE may monitor a DL channel state by receiving a Downlink Reference Signal (DL RS).

After the initial cell search, the UE may acquire more detailed system information by receiving a Physical Downlink Control Channel (PDCCH) and receiving a Physical Downlink Shared Channel (PDSCH) based on information of the PDCCH (S102).

To complete access to the eNB, the UE may perform a random access procedure with the eNB (S103 to S106). In the random access procedure, the UE may transmit a preamble on a Physical Random Access Channel (PRACH) (S103) and may receive a response message to the preamble on a PDCCH and a PDSCH associated with the PDCCH (S104). In the case of a contention-based random access, the UE may additionally perform a contention resolution procedure including transmission of an additional PRACH (S105) and reception of a PDCCH signal and a PDSCH signal corresponding to the PDCCH signal (S106).

After the above procedure, the UE may receive a PDCCH and/or a PDSCH from the eNB (S107) and transmit a Physical Uplink Shared Channel (PUSCH) and/or a Physical Uplink Control Channel (PUCCH) to the eNB (SI08), in a general UL/DL signal transmission procedure.

Information that the UE transmits to the eNB is called Uplink Control Information (UCI). The UCI includes Hybrid Automatic Repeat and reQuest Acknowledgement/Negative Acknowledgement (HARQ-ACK/NACK), Scheduling Request (SR), Channel Quality Indication (CQI), Precoding Matrix Index (PMI), a Rank Indication (RI), etc.

In the LTE system, UCI is generally transmitted on a PUCCH periodically. However, if control information and traffic data should be transmitted simultaneously, they may be transmitted on a PUSCH. In addition, UCI may be transmitted periodically on the PUSCH, upon receipt of a request/command from a network.

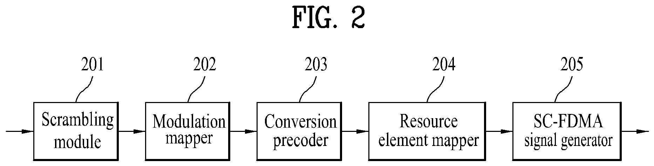

Fig. 2 illustrates a configuration of a UE and a signal processing operation to transmit an uplink signal in the UE.

To transmit a UL signal, a scrambling module 210 of the UE may scramble the transmission signal with a UE-specific scrambling signal. A modulation mapper 220 modulates the scrambled signal to complex symbols in Binary Phase Shift Keying (BPSK), Quadrature Phase Shift Keying (QPSK), or 16-ary Quadrature Amplitude Modulation (16QAM)/64-ary QAM (64QAM) according to the type of the transmission signal and/or a channel state. A Resource Element (RE) mapper 240 may map the complex symbols received from the modulation mapper 220 through a transform precoder 230 to time-frequency REs. The processed signal may be transmitted to an eNB through an antenna, after being processed in an SC-FDMA signal generator 250.

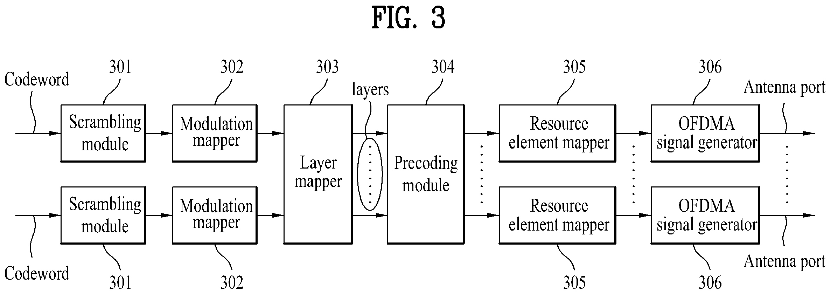

Fig. 3 illustrates a configuration of an eNB and a signal processing operation to transmit a downlink signal in the eNB.

In the 3GPP LTE system, the eNB may transmit one or more codewords on a downlink. Each codeword may be processed to complex symbols through a scrambling module 301 and a modulation mapper 302, as done for the uplink in Fig. 2. Then the complex symbols are mapped to a plurality of layers by a layer mapper 303. Each layer may be multiplied by a precoding matrix in a precoding module 304 and allocated to transmission antennas. Each of the processed antenna-specific transmission signals may be mapped to time-frequency REs in an RE mapper 305 and transmitted through an antenna through an Orthogonal Frequency Division Multiplexing (OFDM) signal generator 306.

Compared to DL signal transmission from an eNB, a Peak-to-Average Power Ratio (PAPR) becomes a problem with UL signal transmission from a UE. As described before with reference to Figs. 2 and 3, a UL signal is transmitted in SC-FDMA, while a DL signal is transmitted in OFDMA.

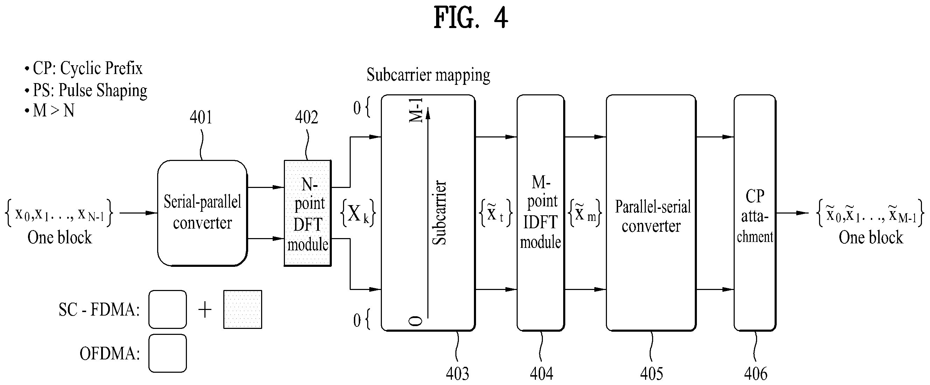

Fig. 4 illustrates a configuration of a UE and SC-FDMA and OFDMA schemes.

A 3GPP system (e.g. the LTE system) adopts OFDMA for downlink and SC-FDMA for uplink. Referring to Fig. 4, a UE and an eNB are common in that each of the UE and the eNB has a serial-to-parallel converter 401, a subcarrier mapper 403, an M-point Inverse Discrete Fourier Transform (IDFT) module 404, and a Cyclic Prefix (CP) adding module 406 in order to transmit a UL signal or a DL signal.

To transmit a signal in SC-FDMA, the UE further includes an N-point Discrete Fourier Transform (DFT) module 402. The N-point DFT module 402 nullifies the effects of IDFT of the IDFT module 404 to some extent so that the transmission signal takes a single carrier property.

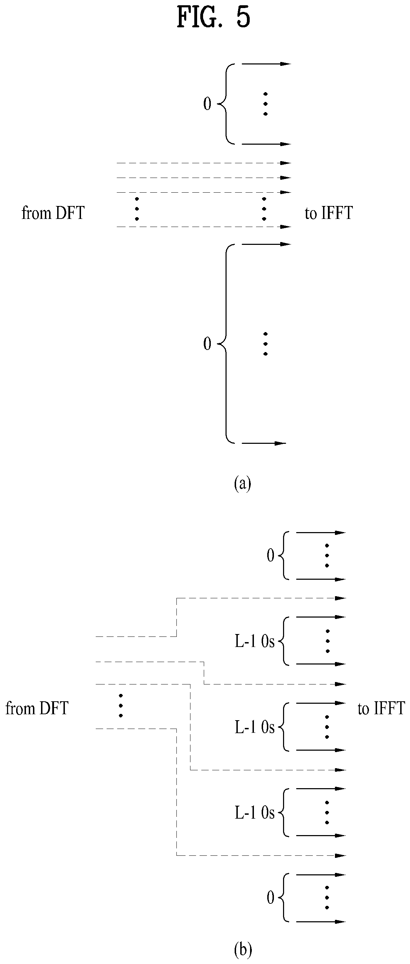

Fig. 5 illustrates frequency-domain signal mapping methods that satisfy a single carrier property in the frequency domain.

Fig. 5(a) illustrates a localized mapping scheme and Fig. 5(b) illustrates a distributed mapping scheme. In clustered SC-FDMA being a modification of SC-FDMA, DFT output samples are divided into sub-groups and mapped to the frequency domain (or a subcarrier domain) non-continuously during subcarrier mapping.

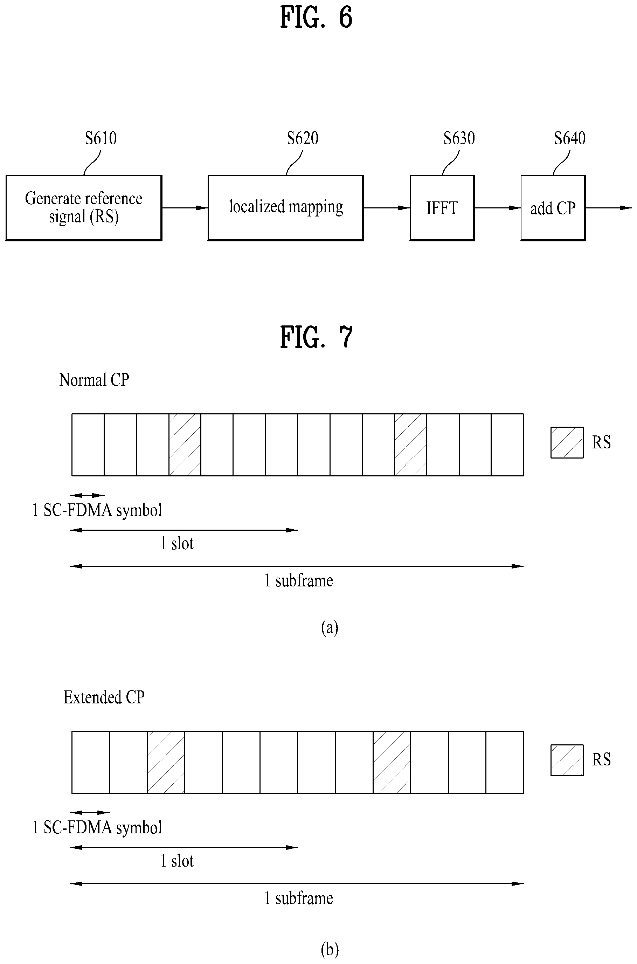

Fig. 6 is a block diagram illustrating transmission of a Reference signal (RS) for use in demodulating a signal transmitted in SC-FDMA.

According to the LTE standard (e.g. 3GPP release 8), while a time signal of data is converted to a frequency signal by DFT, mapped to subcarriers, Inverse Fast Fourier Transform (IFFT)-processed, and then transmitted (refer to Fig. 4), an RS is generated directly in the frequency domain without DFT processing (S601), mapped to subcarriers (S602), IFFT-processed (S603), attached with a Cyclic Prefix (CP) (S640), and then transmitted.

Fig. 7 illustrates the positions of symbols to which RSs are mapped in an SC-FDMA subframe structure.

Fig. 7(a) illustrates a case where an RS is positioned in the fourth SC-FDMA symbol of each of two slots in a subframe, when a normal CP is used. Fig. 7(b) illustrates a case where an RS is positioned in the third SC-FDMA symbol of each of two slots in a subframe, when an extended CP is used.

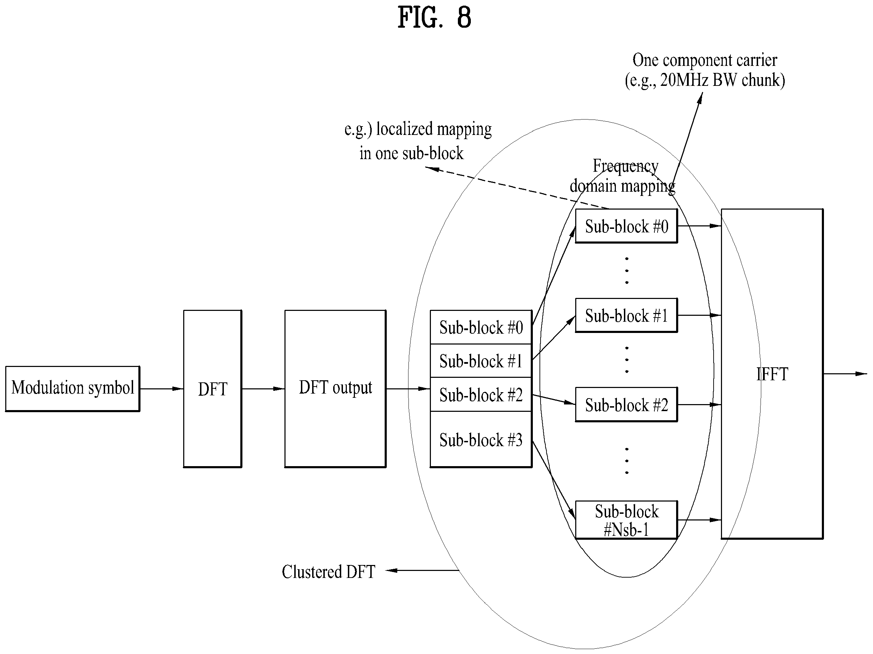

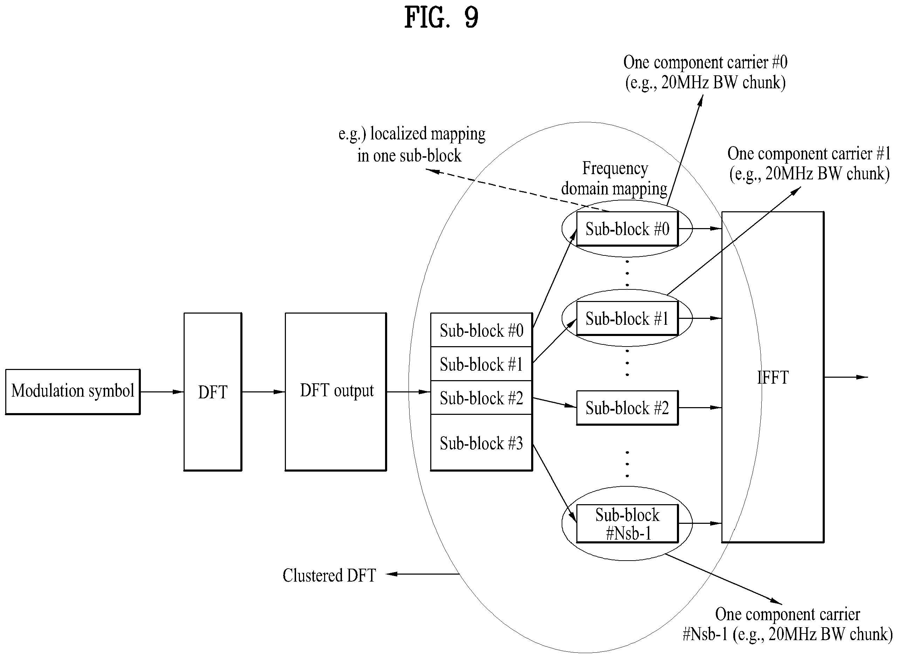

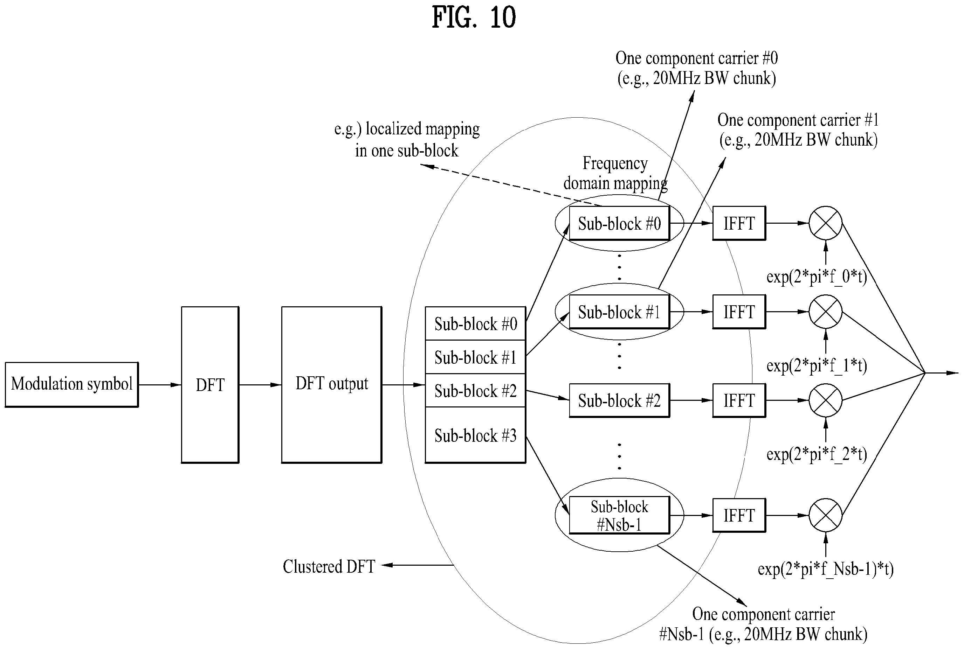

Fig. 8 illustrates a signal processing operation for mapping DFT output samples to a single carrier in clustered SC-FDMA. Figs. 9 and 10 illustrate signal processing operations for mapping DFT output samples to multiple carriers in clustered SC-FDMA.

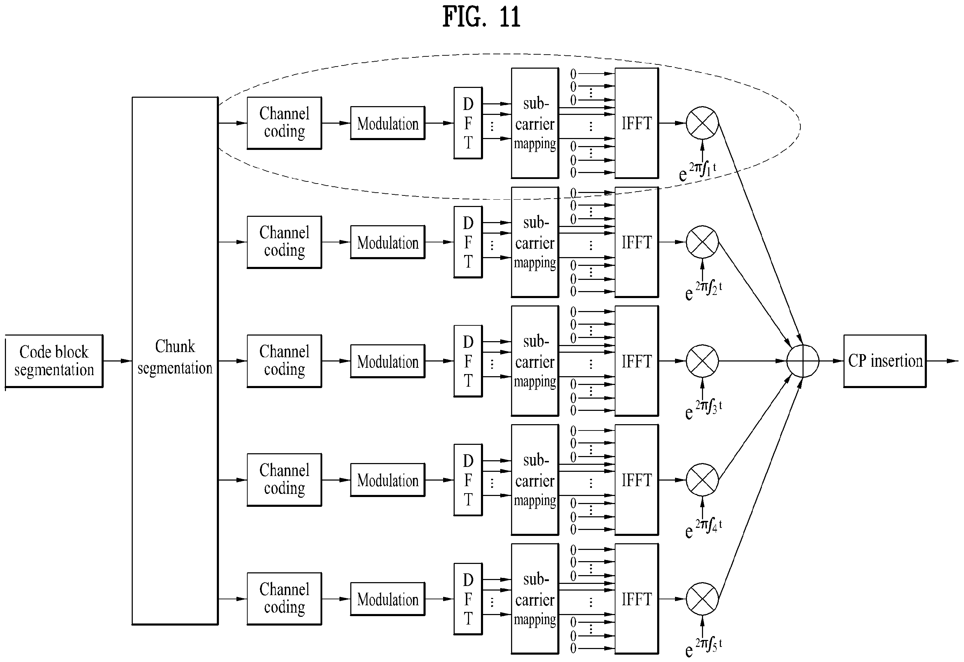

Fig. 8 illustrates an example of intra-carrier clustered SC-FDMA and Figs. 10 and 11 illustrate examples of inter-carrier SC-FDMA. In Fig. 9, with contiguous CCs allocated in the frequency domain, if a subcarrier spacing is aligned between adjacent CCs, a signal is generated from a single IFFT block. In Fig. 10, with non-contiguous CCs allocated in the frequency domain, signals are generated from a plurality of IFFT blocks.

Fig. 11 illustrates a segmented SC-FDMA signal processing operation.

In segmented SC-FDMA, as many IFFT modules as the number of DFT modules are used. Thus, DFT modules are mapped to IFFT modules in a one-to-one correspondence. Thus segmented SC-FDMA is an extension of the DFT spreading and IFFT frequency subcarrier mapping configuration of legacy SC-FDMA, also referred to as NxSC-FDMA or NxDFT-s-OFDMA. Herein, NxSC-FDMA and NxDFT-s-OFDMA are uniformly called segmented SC-FDMA. Referring to Fig. 11, to relieve the single carrier property constraint, total time-domain modulation symbols are grouped into N groups (N is an integer larger than 1) and DFT-processed on a group basis in segmented SC-FDMA.

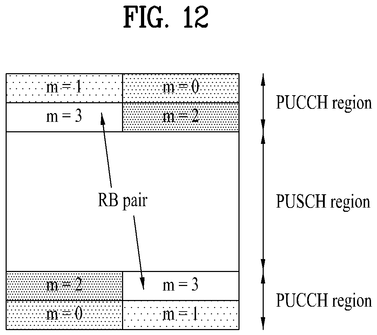

Fig. 12 illustrates an exemplary uplink subframe structure that can be used in embodiments of the present invention.

Referring to Fig. 12, an uplink subframe includes a plurality of (e.g. 2) slots. A slot may include a different number of SC-FDMA symbols according to a CP length. For example, a slot may include 7 SC-FDMA symbols in the case of a normal CP.

The uplink subframe is divided into a data region and a control region. A PUSCH signal is transmitted and received in the data region. The data region is also used to transmit a UL data signal such as voice. A PUCCH signal is transmitted and received in the control region. The control region is also used to transmit UL control information.

The PUCCH includes an RB pair (e.g. m=0, 1, 2 and 3) at both ends of the data region on the frequency axis. The PUCCH includes an RB pair at opposite ends (e.g. a frequency-mirrored RB pair) on the frequency axis and hops over a slot boundary. UCI includes a Hybrid Automatic Repeat reQuest ACKnowledgment/Negative ACKnowledgment (HARQ ACK/NACK), a Channel Quality Indication (CQI), a Precoding Matrix Index (PMI), a Rank Indication (RI), etc.

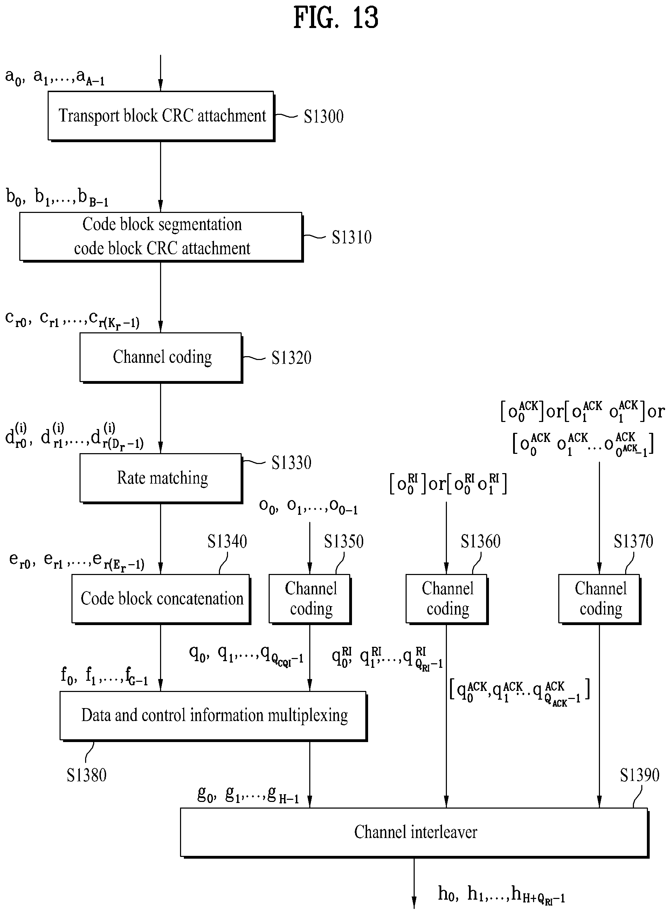

Fig. 13 illustrates an exemplary operation for processing UL-SCH data and control information that can be used in embodiments of the present invention.

Referring to Fig. 13, UL-SCH data is transmitted in one Transport Block (TB) per Transmission Time Interval (TTI) to a coding unit.

Parity bits $p_0, p_1, p_2, p_{L-1}$ are added to TB bits $a_0$, $a_0, a_1, a_2$, $a_3, ..., a_{A-1}$ received from a higher layer. The size of the TB is A and the number of parity bits, L is 24. Input bits attached with CRC bits as an error detection code may be expressed as $b_0, b_1, b_2, b_3, ..., b_{B-1}$

where B is the number of TB bits including the CRC (S1300).

$b_0, b_1, b_2, b_3, ..., b_{B-1}$

The bits are segmented into a plurality of Code Blocks (CBs) according to the TB size and each CB is attached with a CRC. The resulting bits are $c_{r0}, c_{r1}, c_{r2}, c_{r3}, ..., c_r(K_{r-1})$ where r is the index of a CB (r=0, ..., C-1), $K_r$ is the number of bits in CB r, and C is the total number of CBs (S1310).

A channel coding unit channel-encodes the bits $c_{r0}, c_{r1}, c_{r2}, c_{r3}, ...c_r(K_r-1)$ to $d_{r0}^{(i)}, d_{r1}^{(i)}, d_{r2}^{(i)}, d_{r3}^{(i)}, ..., d_{r(D_r-1)}^{(i)}$ where i is the index of a coded data stream (i=0, 1, 2), $D_r$ is the number of bits in an $i^{th}$ coded data stream for CB r (i.e. $D_r = K_r+4$), r is the index of a CB (r=0, 1, ..., C-1), $K_r$ is the number of bits in CB r, and C is the total number of CBs. In embodiments of the present invention, each CB may be channel-encoded in Turbo coding (S1320).

After the channel encoding, rate matching is performed. The rate-matched bits are $e_{r0}, e_{r1}, e_{r2}, e_{r3}, ..., e_r(E_r-1)$ where $E_r$ is the number of rate-matched bits in CB r, r=0, 1, ..., C-1, and C is the total number of CBs (S1330).

CB concatenation follows the rate matching. The CB-concatenated bits are $f_0$, $f_1$, $f_2$, $f_3, ..., f_{G-1}$ where G is the total number of coded bits. If control information is multiplexed with the UL-SCH data, prior to transmission, the bits of the control information are not included in G. $f_0$, $f_1$, $f_2$, $f_3, ..., f_{G-1}$ are a UL-SCH codeword (S1340).

Channel quality information (a CQI and/or a PMI), an RI, and an HARQ ACK as UCI are channel-encoded independently (S1350, S1360, and S1370). Each piece of UCI is channel-encoded based on the number of code symbols for the control information. For example, the number of code symbols may be used in rate-matching the coded control information. The number of code symbols corresponds to the number of modulation symbols, the number of REs, etc. in subsequent operations.

An input CQI bit sequence $o_0$, $o_1$, $o_2$, $o_3, ..., o_{Q-1}$ is channel-encoded to $q_0$, $q_1$, $q_2$, $q_3, ..., q_{QCQI}-1$ (S1350). The CQI is channel-encoded in a different coding scheme according to the number of bits. In addition, if the CQI has 11 or more bits, it is attached with 8 CRC bits. $Q_{CQI}$ is the total number of CQI coded bits. To match the length of the CQI bit sequence to $Q_{CQI}$, the coded CQI bits may be rate-matched. $Q_{CQI} = Q'_{CQI} \times Q_m$ where $Q'_{CQI}$ is the number of CQI code symbols and $Q_m$ is a modulation order for the CQI. $Q_m$ is equal to the modulation order of the UL-SCH data.

An input RI sequence $[o_0^{RI}]$ or $[o_0^{RI} \ o_1^{RI}]$ is channel-encoded (S1360). $[o_0^{RI}]$ and $[o_0^{RI} \ o_1^{RI}]$ are a 1-bit RI and a 2-bit RI, respectively.

The 1-bit RI is subjected to repetition coding. The 2-bit RI is encoded with a (3, 2) simplex code and the RI coded data may be cyclically repeated. An RI having 3 to 11 bits is encoded with a (32, O) RM code used for the UL-SCH. For an RI having 12 or more bits, RI information is divided into two groups and each group is encoded with a (32, O) RM code in a double RM structure. An output RI bit sequence $q_0^{RI}, q_1^{RI}, q_2^{RI}, ..., q_{Q_{RI}-1}^{RI}$ is obtained by concatenating an RI CB(s). Herein, $Q_{RI}$ is the total number of RI coded bits. To match the length of the coded RI bit to $Q_{RI}$, the last concatenated RI CB may be a part (i.e. rate matching). $Q_{RI} = Q'_{RI} \times Q_m$ where $Q'_{RI}$ is the number of RI code symbols and $Q_m$ is a modulation order for the RI. $Q_m$ is equal to the modulation order of the UL-SCH data.

An input HARQ-ACK bit sequence $[o_0^{ACK}]$ , $[o_0^{ACK} \ o_1^{ACK}]$ , or $[o_0^{ACK} \ o_1^{ACK} \cdots o_{O^{ACK}-1}^{ACK}]$ is channel-encoded. $[o_0^{ACK}]$ and $[o_0^{ACK} \ o_1^{ACK}]$ are a 1-bit HARQ-ACK and a 2-bit HARQ-ACK, respectively. $[o_0^{ACK} \ o_1^{ACK} \cdots o_{O^{ACK}-1}^{ACK}]$ is an HARQ-ACK having more than 2 bits (i.e. $O^{ACK} > 2$).

An ACK is encoded to 1 and a NACK is encoded to 0. The 1-bit HARQ-ACK is subjected to repetition coding. The 2-bit HARQ-ACK is encoded with a (3, 2) simplex code and then may be cyclically repeated. An HARQ-ACK having 3 to 11 bits is encoded with a (32, O) RM code used for the UL-SCH. For an HARQ-ACK having 12 or more bits, HARQ-ACK information is divided into two groups and each group is encoded with the (32, O) RM code in a double RM structure.

$Q_{ACK}$ is the total number of HARQ-ACK coded bits. $q_0^{ACK}, q_1^{ACK}, q_2^{ACK}, ..., q_{Q_{ACK}-1}^{ACK}$ is obtained by concatenating an HARQ-ACK CB(s). To match the length of the HARQ-ACK bit sequence to $Q_{ACK}$, the last concatenated HARQ-ACK CB may be a part (i.e. rate matching). $Q_{ACK} = Q'_{ACK} \times Q_m$ where $Q'_{ACK}$ is the number of HARQ-ACK code symbols and $Q_m$ is a modulation order for the HARQ-ACK. $Q_m$ is equal to the modulation order of the UL-SCH data.

A data/control multiplexing block receives the UL-SCH coded bits $f_0, f_1, f_2, f_3, ..., f_{G-1}$ and the CQI/PMI coded bits $q_0, q_1, q_2, q_3, ..., q_{Q_{CQI}-1}$ (S1380). The data/control multiplexing block outputs bits $\underline{g}_0, \underline{g}_1, \underline{g}_2, \underline{g}_3, ..., \underline{g}_{H'-1}$ where $\underline{g}_1$ is a column vector of length $Q_m$ $(i=0,...,H'-1)$. $g_i (i=0,...H'-1)$ is a column vector of length $(Q_m \cdot N_L)$. $H = (G + N_L \cdot Q_{CQI})$ and $H'+H/(N_L \cdot Q_m)$ where $N_L$ is the number of layers to which a UL-SCH TB is mapped, and H is the total number of coded bits allocated tor UL-SCH data and CQI/PMI information in the $N_L$ transmission layers to which the TB is mapped. Herein, H is the total number of coded bits allocated to the UL-SCH data and the CQI/PMI.

A channel interleaver channel-interleaves input coded bits. The input of the channel interleaver is the output of the data/control multiplexing block, $\underline{g}_0, \underline{g}_1, \underline{g}_2, ..., \underline{g}_{H'-1}$ the coded RI $\underline{q}_0^{RI}, \underline{q}_1^{RI}, \underline{q}_2^{RI}, ..., \underline{q}_{Q'_{RI}-1}^{RI}$, and the coded HARQ-ACK $\underline{q}_0^{ACK}, \underline{q}_1^{ACK}, \underline{q}_2^{ACK}, ..., \underline{q}_{Q_{ACK}-1}^{ACK}$ (S1390).

In step S1390, $\underline{g}_i$ is the column vector of the CQI/PMI length $Q_m$ and $i=0,...,H'-1$ ($H' = H/Q_m$). $\underline{q}_i^{ACK}$ is the column vector of the ACK/NACK length $Q_m$ and $i = 0,....,Q'_{ACK}-1$ ($Q'_{ACK} = /Q_m$). $\underline{q}_i^{RI}$ is the column vector of the RI length $Q_m$ and $i=0,..., Q'_{RI}-1$ ($Q'_{RI} = Q'_{RI}/Q_m$

The channel interleaver multiplexes the control information for PUSCH transmission and/or the UL-SCH data. Specifically, the channel interleaver maps the control information and the UL-SCH data to a channel interleaver matrix corresponding to PUSCH resources.

After the channel interleaving, a bit sequence $h_0, h_1, h_2, ..., h_{H+Q_{RI}-1}$ is output from the channel interleaver matrix column by column. The interleaved bit sequence is mapped to a resource grid.

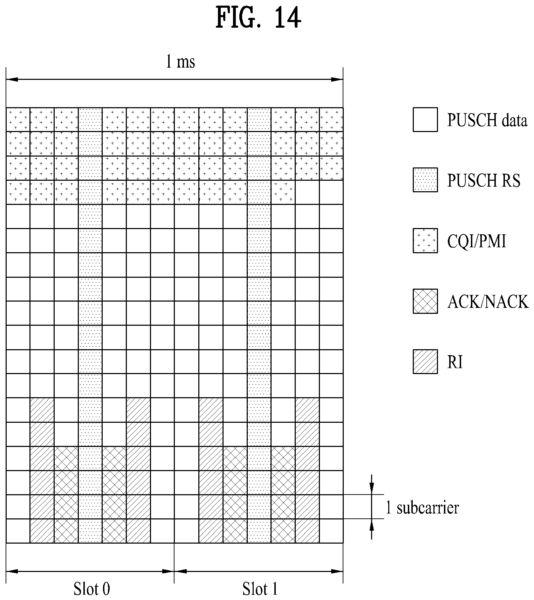

Fig. 14 illustrates an exemplary method for multiplexing UCI and UL-SCH data into a PUSCH.

When a UE transmits control information in a subframe to which PUSCH transmission is allocated, the UE multiplexes UCI with UL-SCH data before DFT spreading. The UCI includes at least one of a CQI/PMI, an HARQ-ACK/NACK, and an RI.

The number of REs used for transmission of each of the CQI/PMI, the HARQ-ACK/NACK, and the RI is determined based on a Modulation and Coding Scheme (MCS) for PUSCH transmission and an offset value ($\Delta_{offset}^{CQI}, \Delta_{offset}^{HARQ-ACK}$, or $\Delta_{offset}^{RI}$). An offset value allows a different coding rate according to control information and is set semi-statically by higher-layer signaling (e.g. Radio Resource Control (RRC) signaling). The UL-SCH data and the control information are mapped to different REs. The control information is mapped to the two slots of a subframe. Because an eNB has prior knowledge of transmission of control information on a PUSCH, it may readily demultiplex control information and a data packet.

Referring to Fig. 14, CQI and/or PMI (CQI/PMI) resources are located at the start of UL-SCH data resources. After a CQI/PMI is mapped sequentially to all SC-FDMA symbols of one subcarrier, it is mapped to another subcarrier. The CQI/PMI is mapped from left to right, that is, in an ascending order of SC-FDMA symbol indexes in a subcarrier. PUSCH data (UL-SCH) data is rate-matched in consideration of the amount of the CQI/PMI resources (i.e. the number of CQI/PMI code symbols). The same modulation order applies to the UL-SCH data and the CQI/PMI.

For example, if the size of CQI/PMI information (the payload size of the CQI/PMI) is small (e.g. 11 or fewer bits), the CQI/PMI information may be encoded with a (32, k) block code, like PUCCH data transmission, and the coded CQI/PMI data may be cyclically repeated. A CRC is not used for a CQI/PMI of a small information size.

If the CQI/PMI information size is large (e.g. more than 11 bits), the CQI/PMI information is attached with an 8-bit CRC, channel-encoded with a trail-biting convolution code, and then rate-matched. An ACK/NACK is inserted into a part of SC-FDMA resources to which the UL-SCH data is mapped by puncturing. The ACK/NACK is adjacent to RSs. In a corresponding SC-FDMA symbol, the ACK/NACK is filled from bottom to top, that is, in an ascending order of subcarrier indexes.

In the case of a normal CP, the ACK/NACK resides in SC-FDMA symbol #2/#4 in each slot, as illustrated in Fig. 14. A coded RI is located in a symbol (i.e. symbol #1/#5) adjacent to the ACK/NACK symbol irrespective of whether the ACK/NACK is actually transmitted in a subframe. The ACK/NACK, the RI, and the CQI/PMI are encoded independently.

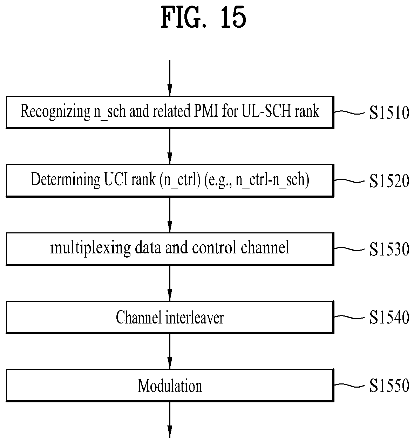

Fig. 15 illustrates multiplexing of control information and UL-SCH data in a Multiple Input Multiple Output (MIMO) system.

Referring to Fig. 15, a UE determines a rank (n_sch) and its related PMI for a UL-SCH (a data part) based on scheduling information configured for PUSCH transmission (S1510). In addition, the UE determines a rank (n_ctrl) for UCI (SI520). The rank of the UCI may be, but not limited to, equal to that of the UL-SCH (n_ctrl=n_sch). Subsequently, the data is multiplexed with the control channel (S1530). A channel interleaver performs time-first mapping on data/CQI and maps an ACK/NACK/RI by puncturing REs near to DM-RSs (sl540). The data and the control channel are modulated, referring to an MCS table (S1550). For example, QPSK, 16QAM, or 64QAM is available as a modulation scheme for the data and the control channel. The order/position of a modulation block may be changed (e.g. before multiplexing the data and the control channel).

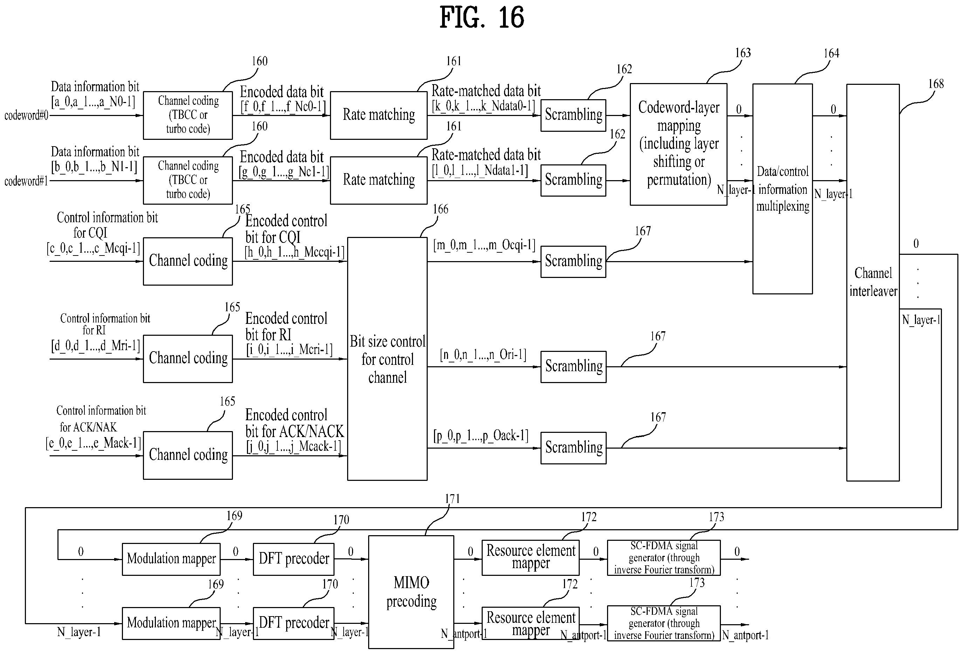

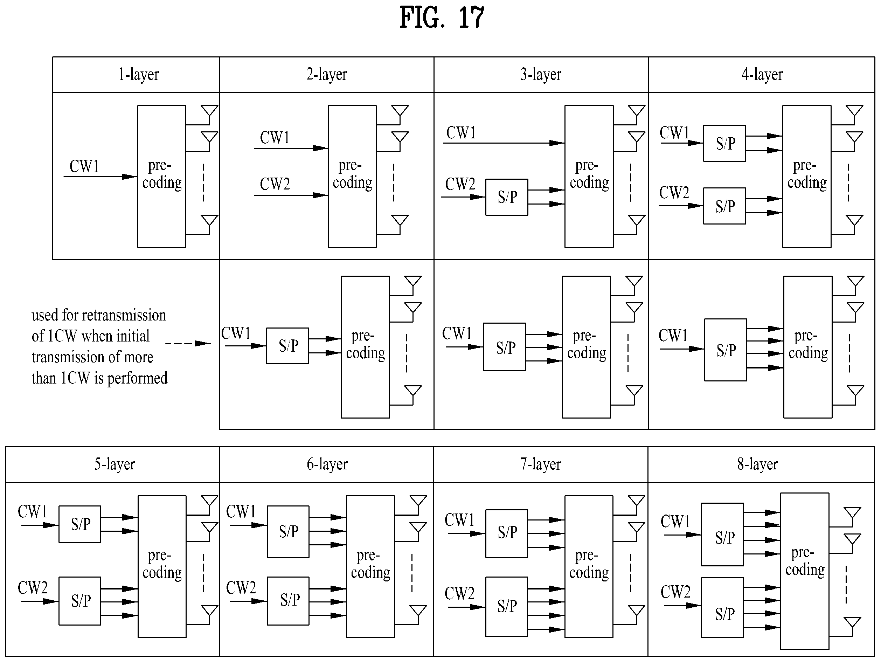

Figs. 16 and 17 illustrate an exemplary method for multiplexing a plurality of UL-SCH TBs with UCI and transmitting the multiplexed signal in a UE according to an embodiment of the present invention.

For the convenience of description, it is assumed in Figs. 16 and 17 that two codewords are transmitted. However, Figs. 16 and 17 may apply to transmission of one codeword or three or more codewords. A codeword and a TB are equivalent and these terms are interchangeably used herein. The basic operation for multiplexing UL-SCH data with control information and transmitting the multiplexed signal is performed in the same manner as or in a similar manner to Figs. 13 and 14. Therefore, the following description focuses on a MIMO-related part.

In Fig. 16, in the case where two codewords are transmitted, each codeword is channel-encoded (160) and rate-matched according to a given MCS level and resource size (161). The coded bits may be scrambled cell-specifically, UE-specifically, or codeword-specifically (162). Then the codewords are mapped to layers (163). The codeword to layer mapping may involve layer shifting or permutation.

The function block 163 may map codewords to layers in the manner illustrated in Fig. 17. Precoding positions of Fig. 17 may be different from the precoding positions of Fig. 13.

Referring to Fig. 16 again, control information such as a CQI, an RI, and an ACK/NACK is channel-encoded in channel encoders 165 according to a given specification. For the CQI, the RI, and the ACK/NACK, the same channel code may be used in encoding every codeword or a different channel code may be used in encoding each codeword.

The number of the coded bits of the control information may be changed by a bit size controller 166. The bit size controller 166 may be incorporated into the channel encoders 165. A signal output from the bit size controller 166 is scrambled (167). The scrambling may be cell-specific, layer-specific, codeword-specific, or UE-specific.

The bit size controller 166 may operate in the following manner.

(1) The bit size controller recognizes the rank of PUSCH data (n_rank_pusch).
(2) The rank of a control channel (n rank control) is set to be equal to that of the data (i.e. n_rank_control= n_rank_pusch) and the number of bits of the control channel (n_bit_ctrl) is increased by multiplying it by the rank of the control channel.

One of methods for performing this operation is to simply repeat the control channel by copying it. The control channel may be at an information level before channel coding or at a coded bit level after channel coding. For example, if a control channel with n_bit_ctrl=4 is [a0, a1, a2, a3] and n_rank_pusch=2, the increased number of bits of the control channel (n_ext_ctrl) may be 8 by extending the control channel to [a0, a1, a2, a3, a0, a1, a2, a3].

In another method, a circular buffer may be used to set the number of extended bits of the control channel n_ext_ctrl to 8.

If the bit size controller 166 is incorporated with the channel encoders 165, the coded bits of the control information may be generated using channel coding and rate matching defined in the legacy system (e.g. LTE Rel-8).

To achieve further randomization of each layer, bit-level interleaving may be performed in addition to the operation of the bit size controller 166. Or modulation symbol-level interleaving equivalent to the bit-level interleaving may be performed.

The CQI/PMI channel and the control information about the two codewords (or control data) may be multiplexed in a data/control multiplexer 164. Then, a channel interleaver 168 maps the ACK/NACK information to REs adjacent to UL DM-RSs in each of the two slots of a subframe, while mapping the CQI/PMI in a time-first mapping scheme.

Subsequently, modulation mappers 169 modulate the respective layers. The modulated data is subjected to DFT precoding in DFT precoders 170 and MIMO precoding in a MIMO precoder 171, and then mapped sequentially to REs in RE mappers 172. SC-FDMA signal generators 173 generate SC-FDMA signals and transmit the generated control signals through antenna ports.

The above-described functional blocks are not limited to the positions illustrated in Fig. 16 and may be changed in position, when needed. For example, the scramblers 162 and 167 may reside after the channel interleaver 168. Further, the codeword to layer mapper 163 may reside after the channel interleaver 168 or the modulation mappers 169.

## 2. Multi-Carrier Aggregation Environment

Communication environments considered in embodiments of the present invention include a multi-carrier environment. That is, a multi-carrier system or a multi-carrier aggregation system refers to a system that aggregates one or more Component Carriers (CCs) each having a smaller bandwidth than a target bandwidth in order to support a broad band in the present invention.

In the present invention, multi-carrier means carrier aggregation (or carrier combining). Carrier aggregation covers aggregation of non-contiguous carriers as well as aggregation of contiguous carriers. The term carrier aggregation is interchangeably used with carrier combining, bandwidth combining, etc.

The LTE-A system aims to support a bandwidth of up to 100MHz by use of multi-carriers (i.e. carrier aggregation) configured by aggregating two or more CCs. To guarantee backward compatibility with a legacy IMT system, each of one or more carriers, which has a smaller bandwidth than a target bandwidth, may be limited to a bandwidth used in the legacy system.

For example, the legacy 3GPP LTE system supports bandwidths {1.4, 3, 5, 10, 15, and 20MHz} and the 3GPP LTE-A system may support a broader bandwidth than 20MHz using these LTE bandwidths. A multi-carrier system of the present invention may support carrier combining (i.e. carrier aggregation) by defining a new bandwidth irrespective of the bandwidths used in the legacy system.

The LTE-A system adopts the concept of cell to manage radio resources. A cell is defined by combining DL and UL resources, although the UL resources are not a necessity. Accordingly, a cell may be configured with DL resources alone or DL and UL resources. If multiple carriers (i.e. carrier combining or carrier aggregation) are supported, the linkage between the carrier frequency of DL resources (or a DL CC) and the carrier frequency of UL resources (or a UL CC) may be indicated by a System Information Block (SIB).

In the LTE-A system, a Primacy Cell (PCell) and a Secondary Cell (SCell) are defined. A PCell refers to a cell operating in a primary frequency (e.g. a Primary CC (PCC)) and an SCell refers to a cell operating in a secondary frequency (a Secondary CC (SCC)). Only one PCell and one or more SCells may be allocated to a specific UE.

The UE uses the PCell for initial connection establishment or connection reestablishment. The PCell may be a cell indicated during handover. An SCell may be configured after RRC connection establishment and may be used to provide additional radio resources.

A PCell and an SCell may be used as serving cells. If the UE is in RRC_CONNECTED state but carrier aggregation has not been configured or is not supported in the UE, only one serving cell including a PCell exists for the UE. On the other hand, if the UE is in RRC_CONNECTED state and carrier aggregation has been configured for the UE, one or more serving cells may exist for the UE. The total serving cells include a PCell and one or more SCells.

After an initial security activation procedure starts, an E-UTRAN may configure a network including one or more SCells by adding them to a PCell initially configured during connection establishment. In a multi-carrier environment, each of a PCell and an SCell may operate as a CC. That is, carrier aggregation may be regarded as combining a PCell with one or more SCells. Hereinbelow, a PCC may be used interchangeably with a PCell in the same meaning and an SCC may be used interchangeably with an SCell in the same meaning.

## 3. Method for Transmitting UCI

Embodiments of the present invention relate to a resource allocation method, a channel coding method, a transmission structure, and joint/separate coding methods regarding UCI and precoding indexes $W_1$ and $W_2$, in the case where UCI is piggybacked to data on a PUSCH in a Carrier Aggregation (CA) environment. Embodiments of the present invention may also apply to a MIMO system and a single antenna transmission environment.

## 3.1 UCI Allocation Positions on PUSCH

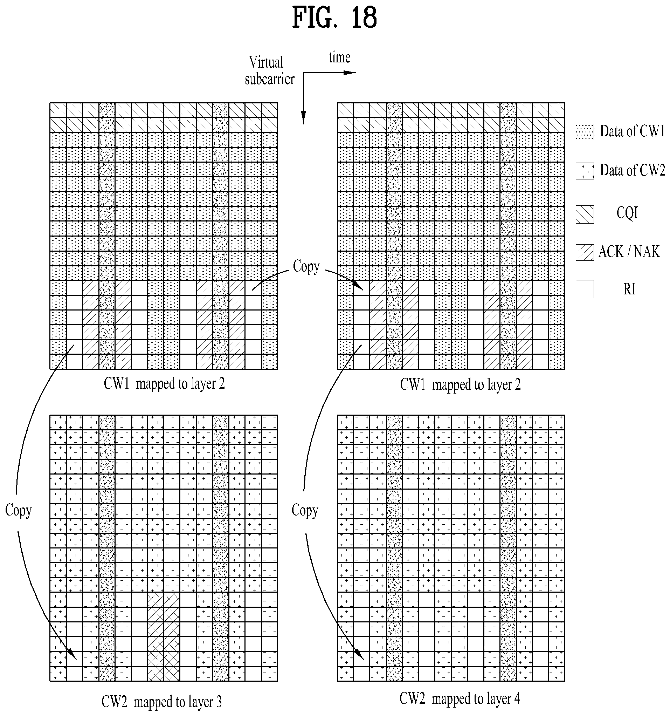

Fig. 18 illustrates one of methods for mapping UL data and UCI to physical REs, for transmission.

In Fig. 18, UCI is transmitted for 2 codewords and 4 layers. A CQI is combined with data and mapped, in a time-first mapping scheme, to the remaining REs except REs to which an RI is mapped, using the same modulation order as used for the data and all constellation points. In Single User MIMO (SU-MIMO), the CQI is spread to one codeword. For example, the CQI is transmitted in a codeword having the higher MCS level between two codewords. If the two codewords have the same MCS level, the CQI is transmitted in codeword 0.

An ACK/NACK is allocated to symbols at both sides of RSs by puncturing the combined CQI and data. Since RSs are located in symbol 3 and symbol 10, the ACK/NACK is mapped upward starting from the lowest subcarrier in symbols 2, 4, 9, and 11. The ACK/NACK is mapped in the order of symbols 2, 11, 9 and 4.

An RI is mapped to symbols adjacent to the ACK/NACK. The RI is mapped first of all information transmitted on the PUSCH (the data, the CQI, the ACK/NACK, and the RI). Specifically, the RI is mapped upward starting from the lowest subcarrier in symbols 1,5,8, and 12. The RI is mapped in the order of symbols 1, 12, 8 and 5.

Particularly, if each of the ACK/NACK and the RI has 1-bit or 2-bit information, they are mapped in QPSK, using four corners of a constellation. If each of the ACK/NACK and the RI has 3 information bits, they may be mapped using all constellations of the same modulation order as that of the data. In addition, each of the ACK/NACK and the RI carries the same information in the same resources at the same positions in all layers.

## 3.2 Calculation of Number of Coded Modulation Symbols for CQI and/or PMI -1

In embodiments of the present invention, the number of modulation symbols may be equivalent to the number of code symbols or the number of REs.

Control information or control data is input in the form of a CQI/PMI, an HARQ-ACK, and an RI to channel encoders (e.g. S1350, S1360, and S1370 in Fig. 13 or 165 in Fig. 16). Since a different number of code symbols are allocated to control information, a different coding rate is applied to the control information. If UCI is transmitted on a PUSCH, control information bits $O_0$, $O_1$, $O_2$ ..., $O_{o-1}$ of UL Channel State Information (CSI), that is, each of an HARQ-ACK, an RI, and a CQI (or PMI) are channel-encoded independently.

When a UE transmits channel quality control information bits (i.e. a CQI or PMI) on a PUSCH, the number of REs per layer for the CQI or PMI may be calculated by [Equation 1].

[Equation 1]

$$Q' = \min\left(\left\lceil \frac{(O+L)\cdot M_{sc}^{PUSCH-initial}\cdot N_{symb}^{PUSCH-initial}\cdot \beta_{offset}^{PUSCH}}{\sum_{r=0}^{C^{(x)}-1} K_r^{(x)}} \right\rceil, M_{sc}^{PUSCH}\cdot N_{symb}^{PUSCH} - \frac{Q_{RI}}{Q_m}\right)$$

In [Equation 1], the number of REs for the CQI or PMI may be expressed as the number $Q'$ of coded modulation symbols. While the following description focuses on the CQI, the same thing applies to the PMI.

In [Equation 1], $O$ is the number of CQI bits and $L$ is the number of CRC bits attached to the CQI bits. If $O$ is 11 or fewer bits, $L$ is 0 and otherwise, $L$ is 8. That is,

$$L = \begin{cases} 0 & O \le 11 \\ 8 & \text{otherwise} \end{cases}$$

. $\beta_{offset}^{CQI}$ is determined according to the number of transmission codewords for TBs. Parameters for determining offset values in consideration of the Signal to Noise Ratio (SNR) difference between data and UCI are determined to be $\beta_{offset}^{PUSCH} = \beta_{offset}^{CQI}$. $M_{sc}^{PUSCH}$ is a bandwidth allocated (scheduled) for PUSCH transmission in a current PUSCH subframe for a TB, expressed as the number of subcarriers. $N_{symb}^{PUSCH}$ is the number of SC-FDMA symbols in the current subframe carrying the PUSCH, calculated by [Equation 2]. $N_{symb}^{PUSCH-initial}$ is the number of SC-FDMA symbols per initial PUSCH transmission subframe for the same TB, $M_{sc}^{PUSCH-initial}$ is the number of subcarriers in the corresponding subframe, and x of $K_r^{(x)}$ is the index of a TB having the highest MCS indicated by a UL grant. $M_{sc}^{PUSCH-initial}$, $C$ and $K_r^{(x)}$ may be acquired from an initial PDCCH for the same TB.

If the initial PDCCH (DCI format 0) does not include $M_{sc}^{PUSCH-initial}$, $C$ and $K_r^{(x)}$, the UE may determine the values in a different manner.

For example, when an initial PUSCH for the same TB as transmitted at an initial transmission is scheduled semi-persistently, $M_{sc}^{PUSCH-initial}$, $C$ and $K_r^{(x)}$ may be determined from the latest semi-persistently scheduled PDCCH. Or $M_{sc}^{PUSCH-initial}$, $C$ and $K_r^{(x)}$ may be determined from a random access response grant for the same TB, when the initial PUSCH is indicated by the random access response grant.

The number G of data information bits of the UL-SCH may be calculated by the following equation.

[Equation 2]

$$G = N_{symb}^{PUSCH} \cdot M_{sc}^{PUSCH} \cdot Q_m - Q_{CQI} - Q_{RI}$$

Once the number of REs for the CQI is determined in the above-described manner, the number of channel-coded bits of the CQI may be calculated in consideration of a modulation scheme. $Q_{CQI}$ is the total number of CQI coded bits and $Q_{CQI} = Q_m \cdot Q'$ where $Q_m$ is the number of bits per symbol according to a modulation order, 2 in QPSK, 4 in 16QAM, and 6 in 64QAM. Since RI resources are first allocated, the number of REs allocated to the RI is excluded. If the RI is not transmitted, $Q_{RI} = 0$.

**3.3 Calculation of Number of Coded Modulation Symbols for HARQ-ACK or RI**

Now, a description will be given of methods for calculating the numbers of REs for an ACK/NACK and an RI in a different manner from Clause 3.1.

When a UE transmits HARQ-ACK bits or RI bits in a single cell, the UE should determine the number $Q'$ of coded modulation symbols per layer for the HARQ-ACK or the RI. [Equation 3] is used to calculate the number of modulation symbols, when only one TB is transmitted in a UL cell.

[Equation 3]

$$Q' = \min\left(\left\lceil \frac{O \cdot M_{sc}^{PUSCH-initial} \cdot N_{symb}^{PUSCH-initial} \cdot \beta_{offset}^{PUSCH}}{\sum_{r=0}^{C-1} K_r} \right\rceil, 4 \cdot M_{sc}^{PUSCH}\right)$$

In [Equation 3], the number of REs for the ACK/NACK (or the RI) may be expressed as the number $Q'$ of coded modulation symbols. Herein, $O$ is the number of ACK/NACK (or RI) bits. $\beta_{offset}^{HARQ-ACK}$ and $\beta_{offset}^{RI}$ are determined according to the number of transmission codewords for each TB. Parameters for setting offset values in consideration of the SNR difference between data and UCI are determined to be $\beta_{offset}^{PUSCH} = \beta_{offset}^{HARQ-ACK}$ and $\beta_{offset}^{PUSCH} = \beta_{offset}^{RI}$.

$M_{sc}^{PUSCH}$ is a bandwidth allocated (scheduled) for PUSCH transmission in a current subframe for a TB, expressed as the number of subcarriers. $N_{symb}^{PUSCH-initial}$ is the number of SC-FDMA symbols per initial PUSCH transmission subframe for the same TB and $M_{sc}^{PUSCH-initial}$ is the number of subcarriers per subframe for initial PUSCH transmission. $N_{symb}^{PUSCH-initial}$ may be calculated by [Equation 2].

The number $M_{sc}^{PUSCH-initial}$ of subcarriers for an initial transmission TB, the total number C of CBs derived from a TB, and the size $K_r^{(x)}, x = \{0,1\}$ of each CB may be acquired from an initial PDCCH for the same TB.

If these values are not included in the initial PDCCH (DCI format 0 or 4), they may be determined in a different manner. For example, when an initial PUSCH for the same TB is semi-persistently scheduled, $M_{sc}^{PUSCH-initial}$, C, and $K_r^{(x)}, x = \{0,1\}$ may be determined from the latest semi-persistently scheduled PDCCH. Or these values may be determined from a random access response grant for the same TB, when the initial PUSCH is indicated by the random access response grant.

When the UE is to transmit two TBs in a UL cell, the UE should determine the number Q' of coded modulation symbols per layer for the HARQ-ACK or the RI. When the initial transmission resource values of the two TBs are different in the UL cell, the number of modulation symbols is calculated by [Equation 4] and [Equation 5].

[Equation 4]

$$Q' = \max\left[\min\left(Q'_{temp}, 4 \cdot M_{sc}^{PUSCH}\right), Q'_{\min}\right]$$

[Equation 5]

$$Q'_{temp} = \left\lceil \frac{O \cdot M_{sc}^{PUSCH-initial(1)} \cdot N_{symb}^{PUSCH-initial(1)} \cdot M_{sc}^{PUSCH-initial(2)} \cdot N_{symb}^{PUSCH-initial(2)} \cdot \beta_{offset}^{PUSCH}}{\sum_{r=0}^{C^{(1)}-1} K_r^{(1)} \cdot M_{sc}^{PUSCH-initial(2)} \cdot N_{symb}^{PUSCH-initial(2)} + \sum_{r=0}^{C^{(2)}-1} K_r^{(2)} \cdot M_{sc}^{PUSCH-initial(1)} \cdot N_{symb}^{PUSCH-initial(1)}} \right\rceil$$

In [Equation 4] and [Equation 5], the number of REs for the ACK/NACK (or the RI) may be expressed as the number Q' of coded modulation symbols. O is the number of ACK/NACK (or RI) bits. If $O \le 2$ and $Q'_{\min} = \lceil 2O / Q'_m \rceil$, $Q'_{\min} = O$ and otherwise, $Q'_m = \min\left(Q_m^1, Q_m^2\right)$. $Q_m^x, x = \{1,2\}$ indicating the modulation order of a TB 'x' and $M_{sc}^{PUSCH-initial(x)}$, x = {1,2} indicating a scheduled bandwidth expressed as the number of subcarriers for PUSCH transmission in an initial subframe for a first TB and a second TB.

In addition, $N_{symb}^{PUSCH-initial(x)}$, x = {1,2} is the number of SC-FDMA symbols per subframe for initial PUSCH transmission of the first and second TBs. $N_{symb}^{PUSCH-initial(x)}$ may be calculated by [Equation 6].

[Equation 6]

$$N_{symb}^{PUSCH-initial(x)} = \left(2 \cdot \left(N_{symb}^{UL} - 1\right) - N_{SRS}^{(x)}\right), x = \{1,2\}$$

If the UE transmits a PUSCH and an SRS in the same subframe for initial transmission of TB 'x' or PUSCH resource allocation for initial transmission of TB 'x' is partially overlapped with a cell-specific RSR subframe and bandwidth configuration, $N_{SRS}^{(x)}$, x= {1,2} is 1 and otherwise, $N_{SRS}^{(x)}$, x = {1,2} is 0 in [Equation 6].

In embodiments of the present invention, the UE may acquire $M_{sc}^{PUSCH-initial(x)}$, x = {1,2}, C, and $K_r^{(x)}$,

{1,2} from an initial PDCCH for a corresponding TB. If the initial PDCCH (DCI format 0 or 4) does not include these values, the values may be determined in a different manner. For example, when an initial PUSCH for the same TB is semi-persistently scheduled, $M_{sc}^{PUSCH-initial(x)}$, $x = \{1,2\}, C$, and $K_r^{(x)}$, $x = \{1,2\}$ may be determined from the latest semi-persistently scheduled PDCCH. Or these values may be determined from a random access response grant for the same TB, when the initial PUSCH is indicated by the random access response grant.

In [Equation 4] and [Equation 5], $\beta_{offset}^{HARQ-ACK}$ and $\beta_{offset}^{RI}$ are determined according to the number of transmission codewords for each TB. Parameters for setting offset values in consideration of the SNR difference between data and UCI are determined to be $\beta_{offset}^{PUSCH} = \beta_{offset}^{HARQ-ACK}$ and $\beta_{offset}^{PUSCH} = \beta_{offset}^{RI}$.

## 3.4 Methods for Transmitting Only UCI without UL Data on PUSCH

Now, a description will be given of methods for transmitting only UCI on a PUSCH. If a UE transmits control data without UL data on a PUSCH, the UE (1) channel-encodes UCI, (2) maps the UCI, and (3) interleaves the channel-encoded UCI using a channel interleaver.

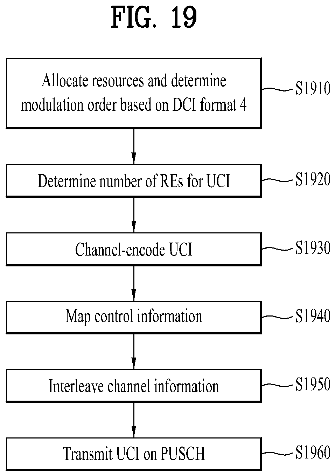

Fig. 19 illustrates one of methods for transmitting only UCI without UL data on a PUSCH.

Before a UE channel-encodes UCI in a CA environment, the UE may allocate resources to the UCI, determine a modulation order for the UCI, and restrict transmission of a CQI/PMI optionally according to the type of the UCI.

The UE may receive a PDCCH signal carrying DCI and/or a UL Grant from an eNB. The DCI is configured in DCI format 4 which is used for scheduling a PUSCH of a UL cell in multi-antenna port mode. That is, upon receipt of DCI format 4, the UE may acquire scheduling information about a PUSCH of a UL cell indicated by the DCI format.

The UE may allocate resources for UCI transmission according to DCI format 4 and determine a modulation order for the UCI (S1910).

If the UE is to transmit only the UCI without UL data on the PUSCH, the UE may determine the number of code symbols (i.e. the number of REs) for HARQ-ACK bits or RI bits included in the UCI. The UE may restrict CQI/PMI control information according to the type of the UCI (S1920).

Then the UE channel-encodes the UCI (S1930), maps the UCI (S1940), and interleave the channel-encoded UCI through a channel interleaver (S1950). The UCI may be mapped to physical resources in the manner illustrated in Fig. 18.

The UE transmits the UCI processed in steps S1910 through S1950 on the PUSCH (S1960).

Hereinafter, methods for determining the number of REs for UCI in step S 1920 will be described.

The control data is reached to a coding unit of the UE in the form of a CQI and/or a PMI, an HARQ-ACK, and an RI. Different coding rates may be applied to control information by allocating different numbers of code symbols to the control information. When the UE transmits HARQ-ACK bits or RI bits, the UE determines the number $Q'$ of code symbols for the HARQ-ACK or the RI to channel-encode the HARQ-ACK bits or the RI bits.

The following [Equation 7] describes one of methods for determining the number of code symbols for an HARQ-ACK or an RI. The number of code symbols may represent the number of modulation symbols or the number of REs.

[Equation 7]

$$Q' = \min\left(\left\lceil \frac{O \cdot M_{sc}^{PUSCH} \cdot N_{symb}^{PUSCH} \cdot \beta_{offset}^{PUSCH}}{O_{CQI-MIN}} \right\rceil, 4 \cdot M_{sc}^{PUSCH}\right)$$

where $O$ is the number of HARQ-ACK bits (or RI bits) and $O_{CQI-MIN}$ is the number of CQI bits including CRC bits on the assumption of rank 1 for all serving cells for which aperiodic CSI reporting is triggered. $M_{sc}^{PUSCH}$ is a scheduled bandwidth for PUSCH transmission in a current subframe, expressed as the number of subcarriers. $N_{symb}^{PUSCH}$ is the number of SC-

$$N_{symb}^{PUSCH} = \left(2 \cdot \left(N_{symb}^{UL} - 1\right) - N_{SRS}\right)$$

FDMA symbols in the current subframe carrying the PUSCH. Herein, $\qquad$ · In the case, if the UE is configured to simultaneously transmit a PUSCH and an SRS in the current subframe, if a PUSCH resource allocation in the current subframe is partially overlapped with a cell-specific SRS subframe, or if the current subframe is a UE-specific type-1 SRS subframe, then $N_{SRS}$ is 1 and otherwise, $N_{SRS}$ is 0.

For HARQ-ACK information, $Q_{ACK} = Q_m \cdot Q'$ and $\left[\beta_{offset}^{PUSCH} = \beta_{offset}^{HARQ-ACK} \big/ \beta_{offset}^{CQI}\right]$ where $\beta_{offset}^{HARQ-ACK}$ is determined according to the 36.213 specification. For RI information, $Q_{RI} = Q_m \cdot Q'$ and $\left[\beta_{offset}^{PUSCH} = \beta_{offset}^{RI} \big/ \beta_{offset}^{CQI}\right]$ where $\beta_{offset}^{RI}$ is determined according to the 36.213 specification. For CQI and/or PMI information,

$$Q_{CQI} = N_{symb}^{PUSCH} \cdot M_{sc}^{PUSCH} \cdot Q_m - Q_{RI} \cdot$$

The control information may be channel-encoded and rate-matched in the manner described before with reference to Fig. 13. Coded CQI information is denoted by $q_0, q_1, q_2, q_3, ..., q_{Q_{CQI}-1}$, a coded vector sequence of an HARQ-ACK is denoted by

$$\underline{q}_0^{ACK}, \underline{q}_1^{ACK}, \underline{q}_2^{ACK}, ..., \underline{q}_{Q'_{ACK}-1}^{ACK},$$

and a coded vector sequence of an RI is denoted by

$$\underline{q}_0^{RI}, \underline{q}_1^{RI}, \underline{q}_2^{RI}, ..., \underline{q}_{Q'_{RI}-1}^{RI} \cdot$$

A detailed description will be given below of various methods for transmitting only UCI at a UE.

## 3.4.1 Methods for Allocating Resources in Case of UCI Only Transmission on PUSCH

Resource allocation methods available in step S1910 of Fig. 19 will be described in detail. For example, various resource allocation methods for transmitting only UCI (1) on a PUSCH (2) with DCI format 4 (3) in a CA environment will be described. In the present invention, DCI format 4 is used to schedule a PUSCH in a UL cell in multi-antenna port mode.

### 3.4.1.1 Restriction of Maximum Number of RBs

A maximum number of RBs available for PUSCH transmission may be set. That is, in the case of UCI-only transmission on a PUSCH, a maximum number of RBs available to a UE may be set. For example, the maximum number of RBs may be 8.

Or if a currently supported CQI is encoded at a code rate of 1/3 for 5 CCs (i.e. 5 cells), 12 RBs is sufficient in QPSK even though an ACK/NACK and an RI are of maximum sizes. Accordingly, the maximum number of RBs may be 12.

Of the maximum number of RBs may be fixed to 4, 8, or 12 irrespective of a modulation order.

### 3.4.1.2 Determination of Number of RBs according to Modulation Order

The number X of RBs allocated for PUSCH transmission may vary with modulation orders used in the UE.

The number of allocated RBs may be inversely proportional to the number of bits per modulation symbol according to a modulation order. For example, if the number of RBs is 8 for QPSK, the UE may use 4 RBs in 16QAM. Or if the number of RBs is 4 for QPSK, the UE may use 2 RBs in 16QAM.

In the case of UCI only transmission on a PUSCH, the number X of allocated RBs may be calculated by the following equation.

[Equation 8]

$$X = \min\left(Y \times RB, RB_{max} \times RB\right)$$

where Y is determined according to a modulation order used for UCI transmission and $RB_{max}$ is a maximum number of RBs determined in Clause 3.4.1.1.

Only if a corner constellation is used, 16QAM or 64QAM may be treated as QPSK and the number of allocated RBs or a maximum number of RBs may be set accordingly.

The methods described in Clause 3.4.1 are applicable in the same manner to DCI format 0. DCIO format 0 is used for PUSCH scheduling in a UL cell.

### 3.4.2 Methods for Determining Modulation Order in Case of UCI Only Transmission on PUSCH

Methods for determining a modulation order for UCI transmission available in step S1910 of Fig. 19 will be described below in detail. In embodiments of the present invention, a UE and/or an eNB may always use only a fixed modulation order. For example, the UE may always use QPSK or 16QAM. That is, the UE may use a fixed modulation order for all carriers in a multi-carrier environment where one or more carriers are aggregated.

The UE may use QPSK, 16QAM, or 64QAM as a modulation order. Note that in the case of 16QAM or 64QAM, the UE may use 16QAM or 64QAM like QPSK by using only a corner constellation.

Once a maximum number of RBs is determined, the UE may determine a modulation order according to the maximum number of RBs. For example, given a maximum number of RBs set to 12, the UE may use QPSK. If the maximum number of RBs is 6, the UE may use 16QAM and if the maximum number of RBs is 4, the UE may use 64QAM. Or if the maximum number of RBs is 8, the UE may use QPSK and the maximum number of RBs is 4, the UE may use 16QAM.

### 3.4.3 Methods for Restricting CSI according to UCI Type in Case of UCI Only Transmission on PUSCH

A detailed description will be given below of methods for selectively restricting CSI (e.g., a CQI/PMI) according to a UCI type in step S1910 of Fig. 19 will be described. If the UE transmits only UCI on a PUSCH in a CA environment, the UE may restrict a CQI/PMI being CSI according to the type of the transmitted UCI. It is because two or more serving cells are aggregated and thus the amount of CSI may be increased in the CA environment. Accordingly, transmission of specific CSI is preferably restricted due to too limited resources to transmit all CSI on a PUSCH.

### 3.4.3.1 Methods for Dropping CSI for Some CCs

CQIs/PMIs for some CCs may be dropped according to the number of transmitted UCI information bits as follow methods (1) to (10).

    (1) CQIs/PMIs may be dropped in a descending order of the indexes of SCCs.
    (2) CQIs/PMIs may be dropped in an ascending order of the indexes of SCCs.
    (3) CQIs/PMIs may be dropped in an order of SCCs indicated by higher layer signaling from an eNB.
    (4) CQIs/PMIs may be dropped in an ascending order of the channel qualities of SCCs.
    (5) CQIs/PMIs may be dropped in a descending order of the channel qualities of SCCs.
    (6) CQIs/PMIs may be dropped in an ascending order of the downlink data throughputs of SCCs.
    (7) CQIs/PMIs may be dropped in a descending order of the downlink data throughputs of SCCs.
    (8) CQIs/PMIs may be dropped in an ascending order of time elapses of CQI/PMI reporting for SCCs. For example, the UE may drop a CQI/PMI for an SCC for which a CQI/PMI has been reported most recently.
    (9) CQIs/PMIs may be dropped in an ascending order of the MCS levels of SCCs.
    (10) CQIs/PMIs may be dropped in a descending order of the MCS levels of SCCs.

### 3.4.3.2 Methods for Transmitting Only CSI for Some CCs

The UE may prioritize some CCs according to the number of UCI information bits and/or UCI types and may transmit only specific CSI (i.e. CQIs/PMIs) for the CCs as follow methods (1) to (12).

    (1) The UE may transmit only a CQI/PMI for a PCC.
    (2) The UE may transmit only a CQI/PMI for a PCC and CQIs/PMIs for some SCCs. Herein, the CQIs/PMIs for the SCCs may be transmitted in an ascending order of the CC indexes of the SCCs.
    (3) The UE may transmit only a CQI/PMI for a PCC and CQIs/PMIs for some SCCs. Herein, the CQIs/PMIs for the SCCs may be transmitted in a descending order of the CC indexes of the SCCs.
    (4) The UE may transmit only a CQI/PMI for a PCC and CQIs/PMIs for some SCCs may be transmitted. Herein, the CQIs/PMIs for the SCCs may be transmitted in an order of the SCCs indicated by high layer signaling from an eNB.
    (5) The UE may transmit only a CQI/PMI for a PCC and CQIs/PMIs for some SCCs may be transmitted. Herein, the CQIs/PMIs for the SCCs may be transmitted in a descending order of the downlink data throughputs of the SCCs.
    (6) The UE may transmit only a CQI/PMI for a PCC and CQIs/PMIs for some SCCs may be transmitted. Herein, the CQIs/PMIs for the SCCs may be transmitted in an ascending order of the downlink data throughputs of the SCCs.
(7) The UE may transmit only a CQI/PMI for a PCC and CQIs/PMIs for some SCCs may be transmitted. Herein, the CQIs/PMIs for the SCCs may be transmitted in an ascending order of the channel qualities of the SCCs.
(8) The UE may transmit only a CQI/PMI for a PCC and CQIs/PMIs for some SCCs may be transmitted. Herein, the CQIs/PMIs for the SCCs may be transmitted in a descending order of the channel qualities of the SCCs.
(9) The UE may transmit only a CQI/PMI for a PCC and CQIs/PMIs for some SCCs may be transmitted. Herein, the CQIs/PMIs for the SCCs may be transmitted in a descending order of time elapses of CQI/PMI reporting for the SCCs.
(10) The UE may transmit only a CQI/PMI for a PCC and CQIs/PMIs for some SCCs may be transmitted. Herein, the CQIs/PMIs for the SCCs may be transmitted in an ascending order of the MCS levels of the SCCs.
(11) The UE may transmit only a CQI/PMI for a PCC and CQIs/PMIs for some SCCs may be transmitted. Herein, the CQIs/PMIs for the SCCs may be transmitted in a descending order of the MCS levels of the SCCs.
(12) In the absence of the PCC in (1) to (11), the PCC may be excluded and SCCs may be selected according to a predetermined rule. Then CQIs/PMIs for the SCCs may be transmitted.

### 3.4.3.3 Methods for Determining Number of CCs Carrying CSI

In the case of UCI only transmission on a PUSCH in a CA environment, if only CQIs/PMIs for some CCs are transmitted according to the type of transmitted UCI, the number of transmitted CCs may be determined as follows methods (1) to (3).

(1) If given resources for CQI/PMI transmission does not satisfy a predetermined coding rate and thus an actual coding rate exceeds a reference value during CQI/PMI transmission, the number of CCs carrying CQIs/PMIs may be adjusted so as to decrease the coding rate below the reference value.
However, a CQI/PMI for at least one serving cell (i.e. CC) is transmitted in any case. In this case, if a PCC is present, the serving cell is selected the PCC. In the absence of a PCC, methods (2) to (11) in Clause 3.4.3.2 may be followed.
(2) The reference value for the coding rate may be 1/3 being the coding rate of a convolutional code used for encoding CQIs/PMIs in method (1).
(3) The reference value for the coding rate may be 1/2 in method (1).

### 3.4.3.4 Method for Transmitting Part of CQIs/PMIs Allocated to CCs according to UCI Type

In the case of UCI only transmission on a PUSCH in a CA environment, the UE may transmit only a part of CQIs/PMIs allocated to CCs according to the type of transmitted UCI. That is, the UE may prioritize CQIs/PMIs and transmit CQIs/PMIs according to their priority levels.
For example, the UE may transmit only wideband CQIs/PMIs.
Or the UE may transmit only CQIs.
Or the UE may transmit only subband CQIs/PMIs.

### 3.4.3.5 Methods for Dropping Part of CQIs/PMIs Allocated to CCs according to UCI Type

In the case of UCI only transmission on a PUSCH in a CA environment, the UE may drop only a part of CQIs/PMIs allocated to CCs according to the type of transmitted UCI. That is, the UE may prioritize CQIs/PMIs and drop CQIs/PMIs according to their priority levels.
For example, the UE may drop only subband CQIs/PMIs.
Or the UE may drop only CQIs.
Or the UE may drop only wideband CQIs/PMIs.

### 3.4.3.6 UCI Transmission Scheme and CP Types that Restrict CCs or CQI/PMI Transmission in Case of UCI Only Transmission on PUSCH in CA Environment

(1) If all types of UCI (ACK/NACK, RI, CQI/PMI, and SRS) are transmitted in a normal CP case, the operations of Clauses 3.4.3.1 to 3.4.3.3 are applicable.
(2) If an ACK/NACK, an RI, and a CQI/PMI are transmitted at one time in a normal CP case, the operations of Clauses 3.4.3.1 to 3.4.3.3 are applicable.
(3) If three types of UCI including a CQI/PMI from among an ACK/NACK, an RI, a CQI/PMI, and an SRS are transmitted at one time in a normal CP case, the operations of Clauses 3.4.3.1 to 3.4.3.3 are applicable.

(4) The operations of Clauses 3.4.3.1 to 3.4.3.3 are applicable in an extended CP case.

(5) If all types of UCI (ACK/NACK, RI, CQI/PMI, and SRS) are transmitted in an extended CP case, the operations of Clauses 3.4.3.1 to 3.4.3.3 are applicable.

(6) If an ACK/NACK, an RI, and a CQI/PMI are transmitted at one time in an extended CP case, the operations of Clauses 3.4.3.1 to 3.4.3.3 are applicable.

(7) If three types of UCI including a CQI/PMI among an ACK/NACK, an RI, a CQI/PMI, and an SRS are transmitted at one time in an extended CP case, the operations of Clauses 3.4.3.1 to 3.4.3.3 are applicable.

### 3.5 Channel Coding

A method for channel-encoding UCI according to the number of REs for each UCI value calculated in the above-described methods will be described below.

If an ACK/NACK has one information bit, its input sequence may be represented as $[o_0^{ACK}]$ and channel-encoded according to a modulation order as illustrated in [Table 1]. $Q_m$ is the number of bits per symbols for each modulation order, which is 2, 4 and 6 respectively in QPSK, 16QAM, and 64QAM.

[Table 1]

| $Q_m$ | Encoded HARQ-ACK |
|---|---|
| 2 | $[o_0^{ACK} \ y]$ |
| 4 | $[o_0^{ACK} \ y \ x \ x]$ |
| 6 | $[o_0^{ACK} \ y \ x \ x \ x \ x]$ |

If the ACK/NACK has two information bits, its input sequence may be represented as $[o_0^{ACK} \ o_1^{ACK}]$ and channel-encoded according to a modulation order as illustrated in [Table 2]. $o_0^{ACK}$ is an ACK/NACK bit for codeword 0, $o_1^{ACK}$ is an ACK/NACK bit for codeword 1, and $o_2^{ACK} = (o_0^{ACK} + o_1^{ACK}) \bmod 2$. In [Table 1] and [Table 2], x and y are placeholders for scrambling ACK/NACK information so as to maximize the Euclidean distance between modulation symbols carrying the ACK/NACK information.

[Table 2]

| $Q_m$ | Encoded HARQ-ACK |
|---|---|
| 2 | $[o_0^{ACK} \ o_1^{ACK} \ o_2^{ACK} \ o_0^{ACK} \ o_1^{ACK} \ o_2^{ACK}]$ |
| 4 | $[o_0^{ACK} \ o_1^{ACK} \ x \ x \ o_2^{ACK} \ o_0^{ACK} \ x \ x \ o_1^{ACK} \ o_2^{ACK} \ x \ x]$ |
| 6 | $[o_0^{ACK} \ o_1^{ACK} \ x \ x \ x \ x \ o_2^{ACK} \ o_0^{ACK} \ x \ x \ x \ x \ o_1^{ACK} \ o_2^{ACK} \ x \ x \ x \ x]$ |

In multiplexing an ACK/NACK in Frequency Division Duplexing (FDD) or Time Division Duplexing (TDD), if the ACK/NACK is one or two bits, a bit sequence $q_0^{ACK}, q_1^{ACK}, q_2^{ACK}, ..., q_{Q_{ACK}-1}^{ACK}$ is generated by concatenating multiple ACK/NACK CBs. In ACK/NACK bundling in TDD, a bit sequence $\widetilde{q}_0^{ACK}, \widetilde{q}_1^{ACK}, \widetilde{q}_2^{ACK}, ..., \widetilde{q}_{Q_{ACK}-1}^{ACK}$ is also generated by concatenating multiple ACK/NACK CBs. $Q_{ACK}$ is the total number of coded bits of all ACK/NACK CBs. The last concatenated ACK/NACK CB may be configured partially such that the total length of the bit sequence is equal to $Q_{ACK}$.

A scrambling sequence $\left\lfloor w_0^{ACK} \, w_1^{ACK} \, w_2^{ACK} \, w_3^{ACK} \right\rfloor$ may be selected from the following [Table 3] and the index i of the scrambling sequence may be determined by [Equation 9].

[Equation 9]

$$i = \left(N_{bundled} - 1\right) \bmod 4$$

[Table 3]

| i | $\left\lfloor w_0^{ACK} \, w_1^{ACK} \, w_2^{ACK} \, w_3^{ACK} \right\rfloor$ |
|---|---|
| 0 | [ 1 1 1 1] |
| 1 | [1 0 1 0] |
| 2 | [1 1 0 0] |
| 3 | [1 0 0 1] |

[Table 3] is a scrambling sequence table for TDD ACK/NACK bundling.

If the ACK/NACK is one bit, m=1 and if the ACK/NACK is two bits, m=3, to thereby generate the bit sequence $q_0^{ACK}, q_1^{ACK}, q_2^{ACK}, \ldots, q_{Q_{ACK}-1}^{ACK}$ · The bit sequence $q_0^{ACK}, q_1^{ACK}, q_2^{ACK}, \ldots, q_{Q_{ACK}-1}^{ACK}$ is generated by the algorithm expressed as [Table 4].

[Table 4]

Set $i, k$ to 0

while $i < Q_{ACK}$

    if $\tilde{q}_i^{ACK} = y$ // place-holder repetition bit

$q_i^{ACK} = \left(\tilde{q}_{i-1}^{ACK} + w_{\lfloor k/m \rfloor}^{ACK}\right) \bmod 2$

$k = (k+1) \bmod 4m$

else

    if $\tilde{q}_i^{ACK} = x$ // a place-holder bit

$q_i^{ACK} = \tilde{q}_i^{ACK}$

else // coded bit

$q_i^{ACK} = \left(\tilde{q}_i^{ACK} + w_{\lfloor k/m \rfloor}^{ACK}\right) \bmod 2$

$k = (k+1) \bmod 4m$

    end if

    $i = i+1$

end while

If the HARQ-ACK has more than 2 information bits (i.e. $\left[o_0^{ACK}\ o_1^{ACK} \cdots o_{O^{ACK}-1}^{ACK}\right]$ and $O_{ACK} > 2$), the bit sequence may be obtained by [Equation 10].

[Equation 10]

$$q_i^{ACK} = \sum_{n=0}^{O^{ACK}-1} \left(o_n^{ACK} \cdot M_{(i \bmod 32),n}\right) \bmod 2$$

In [Equation 10], i=0, 1, 2, ... $Q_{ACK}$-1 and a base sequence $M_{i,n}$ may be given as [Table 5].

[Table 5]

| i | $M_{i,0}$ | $M_{i,1}$ | $M_{i,2}$ | $M_{i,3}$ | $M_{i,4}$ | $M_{i,5}$ | $M_{i,6}$ | $M_{i,7}$ | $M_{i,8}$ | $M_{i,9}$ | $M_{i,10}$ |
|---|---|---|---|---|---|---|---|---|---|---|---|
| 0 | 1 | 1 | 0 | 0 | 0 | 0 | 0 | 0 | 0 | 0 | 1 |
| 1 | 1 | 1 | 1 | 0 | 0 | 0 | 0 | 0 | 0 | 1 | 1 |
| 2 | 1 | 0 | 0 | 1 | 0 | 0 | 1 | 0 | 1 | 1 | 1 |
| 3 | 1 | 0 | 1 | 1 | 0 | 0 | 0 | 0 | 1 | 0 | 1 |
| 4 | 1 | 1 | 1 | 1 | 0 | 0 | 0 | 1 | 0 | 0 | 1 |
| 5 | 1 | 1 | 0 | 0 | 1 | 0 | 1 | 1 | 1 | 0 | 1 |
| 6 | 1 | 0 | 1 | 0 | 1 | 0 | 1 | 0 | 1 | 1 | 1 |

(continued)

| i | $M_{i,0}$ | $M_{i,1}$ | $M_{i,2}$ | $M_{i,3}$ | $M_{i,4}$ | $M_{i,5}$ | $M_{i,6}$ | $M_{i,7}$ | $M_{i,8}$ | $M_{i,9}$ | $M_{i,10}$ |
|---|---|---|---|---|---|---|---|---|---|---|---|
| 7 | 1 | 0 | 0 | 1 | 1 | 0 | 0 | 1 | 1 | 0 | 1 |
| 8 | 1 | 1 | 0 | 1 | 1 | 0 | 0 | 1 | 0 | 1 | 1 |
| 9 | 1 | 0 | 1 | 1 | 1 | 0 | 1 | 0 | 0 | 1 | 1 |
| 10 | 1 | 0 | 1 | 0 | 0 | 1 | 1 | 1 | 0 | 1 | 1 |
| 11 | 1 | 1 | 1 | 0 | 0 | 1 | 1 | 0 | 1 | 0 | 1 |
| 12 | 1 | 0 | 0 | 1 | 0 | 1 | 0 | 1 | 1 | 1 | 1 |
| 13 | 1 | 1 | 0 | 1 | 0 | 1 | 0 | 1 | 0 | 1 | 1 |
| 14 | 1 | 0 | 0 | 0 | 1 | 1 | 0 | 1 | 0 | 0 | 1 |
| 15 | 1 | 1 | 0 | 0 | 1 | 1 | 1 | 1 | 0 | 1 | 1 |
| 16 | 1 | 1 | 1 | 0 | 1 | 1 | 1 | 0 | 0 | 1 | 0 |
| 17 | 1 | 0 | 0 | 1 | 1 | 1 | 0 | 0 | 1 | 0 | 0 |
| 18 | 1 | 1 | 0 | 1 | 1 | 1 | 1 | 1 | 0 | 0 | 0 |
| 19 | 1 | 0 | 0 | 0 | 0 | 1 | 1 | 0 | 0 | 0 | 0 |
| 20 | 1 | 0 | 1 | 0 | 0 | 0 | 1 | 0 | 0 | 0 | 1 |
| 21 | 1 | 1 | 0 | 1 | 0 | 0 | 0 | 0 | 0 | 1 | 1 |
| 22 | 1 | 0 | 0 | 0 | 1 | 0 | 0 | 1 | 1 | 0 | 1 |
| 23 | 1 | 1 | 1 | 0 | 1 | 0 | 0 | 0 | 1 | 1 | 1 |
| 24 | 1 | 1 | 1 | 1 | 1 | 0 | 1 | 1 | 1 | 1 | 0 |
| 25 | 1 | 1 | 0 | 0 | 0 | 1 | 1 | 1 | 0 | 0 | 1 |
| 26 | 1 | 0 | 1 | 1 | 0 | 1 | 0 | 0 | 1 | 1 | 0 |
| 27 | 1 | 1 | 1 | 1 | 0 | 1 | 0 | 1 | 1 | 1 | 0 |
| 28 | 1 | 0 | 1 | 0 | 1 | 1 | 1 | 0 | 1 | 0 | 0 |
| 29 | 1 | 0 | 1 | 1 | 1 | 1 | 1 | 1 | 1 | 0 | 0 |
| 30 | 1 | 1 | 1 | 1 | 1 | 1 | 1 | 1 | 1 | 1 | 1 |
| 31 | 1 | 0 | 0 | 0 | 0 | 0 | 0 | 0 | 0 | 0 | 0 |

When HARQ-ACK/RI information having two or more bits are transmitted on a PUSCH, the HARQ-ACK/RI information may be encoded with an RM code illustrated in [Table 5]. A channel-coded vector sequence of the HARQ-ACK information may be represented as $\underline{q}_0^{ACK}, \underline{q}_1^{ACK}, ..., \underline{q}_{Q'_{ACK}-1}^{ACK}$ where $Q'_{ACK} = Q_{ACK} / Q_m$.

The bit sequence $\underline{q}_0^{ACK}, \underline{q}_1^{ACK}, ..., \underline{q}_{Q'_{ACK}-1}^{ACK}$ is generated by the algorithm of [Table 6].

[Table 6]

Set *i,k* to 0
while $i < Q_{ACK}$
$$\underline{q}_k^{ACK} = [q_i^{ACK} .. q_{i+Q_m-1}^{ACK}]^T$$
  $i = i + Q_m$
  $k = k + 1$
end while

If the RI has one information bit, its input sequence may be represented as $[o_0^{RI}]$ and channel-encoded according to a modulation order as illustrated in [Table 7].

[Table 7]

| $Q_m$ | Encoded RI |
|---|---|
| 2 | $[o_0^{RI} \; y]$ |
| 4 | $[o_0^{RI} \; y \; x \; x]$ |
| 6 | $[o_0^{RI} \; y \; x \; x \; x \; x]$ |

$Q_m$ is the number of bits per symbols for a modulation order, which is 2, 4 and 6, respectively in QPSK, 16QAM, and 64QAM. An RI is mapped to $[o_0^{RI}]$ as illustrated in [Table 8].

[Table 8]

| $o_0^{RI}$ | RI |
|---|---|
| 0 | 1 |
| 1 | 2 |

If the RI has two information bits, its input sequence may be represented as $[o_0^{RI} \; o_1^{RI}]$ and channel-encoded according to a modulation order as illustrated in [Table 9]. $o_0^{RI}$ is the Most Significant Bit (MSB) of the 2-bit input, $o_1^{RI}$ is the Least Significant Bit (LSB) of the 2-bit input, and $o_2^{RI} = (o_0^{RI} + o_1^{RI}) \bmod 2$.

[Table 9]

| $Q_m$ | Encoded RI |
|---|---|
| 2 | $[o_0^{RI} \; o_1^{RI} \; o_2^{RI} \; o_0^{RI} \; o_1^{RI} \; o_2^{RI}]$ |
| 4 | $[o_0^{RI} \; o_1^{RI} \; x \; x \; o_2^{RI} \; o_0^{RI} \; x \; x \; o_1^{RI} \; o_2^{RI} \; x \; x]$ |
| 6 | $[o_0^{RI} \; o_1^{RI} \; x \; x \; x \; x \; o_2^{RI} \; o_0^{RI} \; x \; x \; x \; x \; o_1^{RI} \; o_2^{RI} \; x \; x \; x \; x]$ |

[Table 10] below illustrates an exemplary mapping relationship between $[o_0^{RI} \; o_1^{RI}]$ and the RI.

[Table 10]

| $o_0^{RI}, \; o_1^{RI}$ | RI |
|---|---|
| 0, 0 | 1 |
| 0, 1 | 2 |
| 1, 0 | 3 |
| 1, 1 | 4 |

In [Table 7] and [Table 9], x and y are placeholders for scrambling RI information so as to maximize the Euclidean distance between modulation symbols carrying the RI information.

A bit sequence $q_0^{RI}, q_1^{RI}, q_2^{RI}, ..., q_{Q_{RI}-1}^{RI}$ is generated by concatenating multiplexed RI CBs. $Q_{RI}$ is the total number of coded bits of all RI CBs. The last concatenated RI CB may be configured partially such that the total length of the bit sequence is equal to $Q_{RI}$.

A channel-coded vector sequence of the RI is represented as $\underline{q}_0^{RI}, \underline{q}_1^{RI}, ..., \underline{q}_{Q'_{RI}-1}^{RI}$ where $Q'_{RI} = Q_{RI} / Q_m$. The vector sequence may be obtained by the algorithm of [Table 11].

[Table 11]

Set $i,k$ to 0
while $i < Q_{RI}$
$$\underline{q}_k^{RI} = [q_i^{RI} ... q_{i+Q_m-1}^{RI}]^T$$
$i = i + Q_m$
$k = k + 1$
end while

If the RI (or the ACK/NACK) has 3 to 11 information bits, the RI is channel-encoded to a 32-bit sequence by the afore-described RM coding. The RM-coded RI (or ACK/NACK) block $b_0, b_1, b_2, b_3, ..., b_{B-1}$ is calculated by [Equation 10], where i=0, 1, 2,.., B-1 and B=32.

[Equation 11]

$$b_i = \sum_{n=0}^{O-1} (o_n \cdot M_{i,n}) \bmod 2$$

In [Equation 11], i=0, 1, 2, ..., $Q_{RI}$-1 and a base sequence $M_{i,n}$ may be given as illustrated in [Table 5]. That is, the RI information bits may be encoded with an RM code illustrated in [Table 5] and transmitted on a PUSCH.

### 3.6 Rate Matching

To map the UCI encoded to B bits by [Equation 9] to Q' REs, the coded UCI may be rate-matched by [Equation 12].

[Equation 12]

$$q_i = b_{i \bmod B}, \quad i = 0, 1, \cdots, Q_m \times Q'-1$$

In [Equation 10], $Q_m$ is the number of bits per modulation symbol, 2, 4 and 6 respectively in QPSK, 16QAM, and 64QAM. The channel coding procedure of Clause 3.4 may be used for or may be replaced with channel coding of UCI (a CQI, a HARQ-ACK, and an RI) in Fig. 13 (e.g. steps S1350, S1360, and S1370). The following channel coding procedures according to embodiments of the present invention may be applied to or replaced with the channel coding of Fig. 13.

### 4. Apparatuses

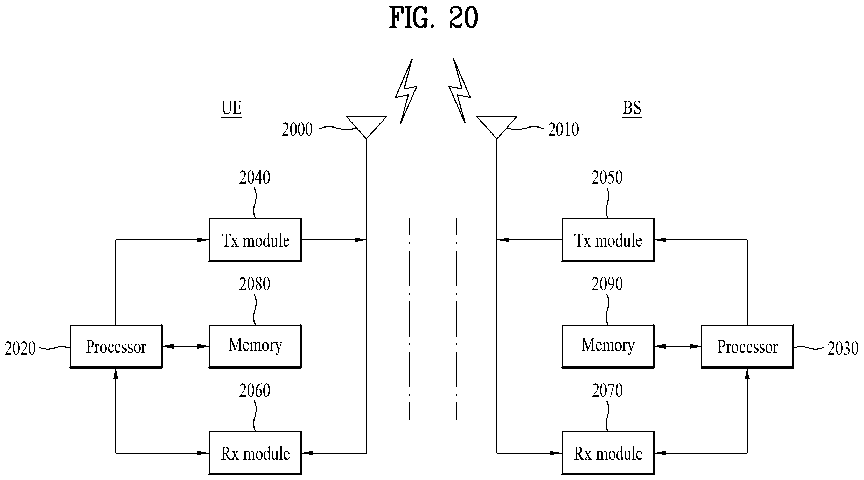

Apparatuses illustrated in Fig. 20 are means that can implement the methods described before with reference to Figs. 1 to 19.

A UE may act as a transmitter on uplink and as a receiver on downlink. An eNB may act as a receiver on uplink and as a transmitter on downlink.

That is, each of the UE and the eNB may include a Tx module 2040 or 2050 and an Rx module 2050 or 2070, for controlling transmission and reception of information, data, and/or messages, and an antenna 2000 or 2010 for transmitting and receiving information, data, and/or messages.

Each of the UE and the eNB may further include a processor 2020 or 2030 for implementing the afore-described embodiments of the present invention and a memory 2080 or 2090 for temporarily or permanently storing operations of the processor.

The embodiments of the present invention may be implemented by the components and functions of the above-described UE and eNB. The apparatuses described above with reference to Fig. 21 may further include the configurations of Figs. 2, 3, and 4, preferably in the processors.

The processor of the UE may receive a PDCCH signal by monitoring an SS. Particularly, an LTE-A UE may receive a PDCCH by blind-decoding a CSS.

The processor of the UE may transmit UCI on a PUSCH to the eNB. For example, the processor of the UE may calculate the number of REs for transmitting an HARQ-ACK, a CQI, an RI, and the like using the methods described in [Equation 1] to [Equation 6]. Therefore, the UE may generate UCI according to the calculated number of REs, piggyback the UCI to UL data, and transmit the UCI piggybacked to the UL data to the eNB.

Or the processor of the UE may transmit only UCI without UL data on a PUSCH to the eNB. For example, the processor of the UE may generate UCI in the method for calculating the number of REs as described in [Equation 7] and transmit the UCI on a PUSCH to the eNB.

The UE and/or the eNB may allocate resources to UCI and determine a modulation order for the UCI, for transmission on a PUSCH in the methods described before with reference to Fig. 19. In addition, the UE and/or the eNB may restrict CQIs/PMIs according to the type of transmitted UCI. The UE may generate UCI by channel coding and then transmit only the UCI without data on the PUSCH to the eNB.

The Tx and Rx modules of the UE and the eNB may perform a packet modulation/demodulation function for data transmission, a high-speed packet channel coding function, OFDMA packet scheduling, TDD packet scheduling, and/or channelization. Each of the UE and the eNB of Fig. 20 may further include a low-power Radio Frequency (RF)/Intermediate Frequency (IF) module.

Meanwhile, the UE may be any of a Personal Digital Assistant (PDA), a cellular phone, a Personal Communication Service (PCS) phone, a Global System for Mobile (GSM) phone, a Wideband Code Division Multiple Access (WCDMA) phone, a Mobile Broadband System (MBS) phone, a hand-held PC, a laptop PC, a smart phone, a Multi Mode-Multi Band (MM-MB) terminal, etc.

The smart phone is a terminal taking the advantages of both a mobile phone and a PDA. It incorporates the functions of a PDA, that is, scheduling and data communications such as fax transmission and reception and Internet connection into a mobile phone. The MB-MM terminal refers to a terminal which has a multi-modem chip built therein and which can operate in any of a mobile Internet system and other mobile communication systems (e.g. CDMA 2000, WCDMA, etc.)

Embodiments of the present invention may be achieved by various means, for example, hardware, firmware, software, or a combination thereof.

In a hardware configuration, the methods according to exemplary embodiments of the present invention may be achieved by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, microprocessors, etc.

In a firmware or software configuration, the methods according to the embodiments of the present invention may be implemented in the form of a module, a procedure, a function, etc. performing the above-described functions or operations. A software code may be stored in the memory unit 2080 or 2090 and executed by the processor 2020 or 2030. The memory unit is located at the interior or exterior of the processor and may transmit and receive data to and from the processor via various known means.

Those skilled in the art will appreciate that the present invention may be carried out in other specific ways than those set forth herein without departing from the spirit and essential characteristics of the present invention. The above embodiments are therefore to be construed in all aspects as illustrative and not restrictive. The scope of the invention should be determined by the appended claims and their legal equivalents, not by the above description, and all changes coming within the meaning and equivalency range of the appended claims are intended to be embraced therein. It is obvious to those skilled in the art that claims that are not explicitly cited in each other in the appended claims may be presented in combination as an embodiment of the present invention or included as a new claim by a subsequent amendment after the application is filed.

[Industrial Applicability]

The present invention is applicable to various wireless access systems including a 3GPP system, a 3GPP2 system, and/or an IEEE 802.xx system. Besides these wireless access systems, the embodiments of the present invention are applicable to all technical fields in which the wireless access systems find their applications.

**Claims**

1. A method for transmitting only Uplink Control Information, UCI, without uplink data on a Physical Uplink Shared Channel, PUSCH, in a wireless access system supporting Carrier Aggregation, CA, of a plurality of component carriers, the plurality of component carriers comprising one primary component carrier and one or more secondary component carriers, the method comprising;

   receiving a Physical Downlink Control Channel, PDCCH, signal including Downlink Control Information, DCI, format 4 from a Base Station, BS, where the DCI format 4 is used for scheduling a PUSCH in multi-antenna port mode;

   determining Channel State Information, CSI, of the one primary component carrier and a part of the one or more secondary component carriers as UCI to be transmitted, wherein the part of the one or more secondary component carriers is determined according to a number of information bits for the UCI to be transmitted;

   allocating resources (S1910) for transmitting the determined UCI based on the DCI format 4;

   calculating (S1920) a number Q' of code symbols for transmitting the determined UCI according to:

$$Q' = \min\left(\left\lceil \frac{O \cdot M_{sc}^{PUSCH} \cdot N_{symb}^{PUSCH} \cdot \beta_{offset}^{PUSCH}}{O_{CQI-MIN}} \right\rceil, 4 \cdot M_{sc}^{PUSCH}\right)$$

   where O denotes a number of Hybrid Automatic Repeat reQuest Acknowledgment, HARQ-ACK, bits or Rank Indicator, RI, bits, $M_{sc}^{PUSCH}$ denotes a scheduled bandwidth for PUSCH transmission in a current subframe, $N_{symb}^{PUSCH}$ denotes a number of Single Carrier Frequency Division Multiplexing Access, SC-FDMA, symbols in the current subframe carrying the PUSCH, $\beta_{offset}^{PUSCH}$ denotes an offset value for PUSCH transmission, $O_{CQI-MIN}$ denotes a number of Channel Quality Indication, CQI, bits including Cyclic Redundancy Check, CRC, bits on an assumption of rank 1;

   channel-encoding (S1930) the determined UCI based on the calculated number of code symbols;

   mapping (S1940) the channel-encoded UCI to the allocated resources;

   interleaving (S1950) the channel-encoded UCI by multiplexing the UCI without uplink data; and

   transmitting (S1960) only the channel-encoded UCI without the uplink data on the PUSCH to the BS,

   wherein the part of the one or more secondary component carriers is determined in an ascending order of channel qualities of the one or more secondary component carriers, according to the number of information bits for the UCI to be transmitted.

2. The method according to claim 1, wherein a number of Resource Blocks, RBs, as the resources allocated for transmitting the determined UCI is changed according to a modulation order, and

   wherein the number of RBs is inversely proportional to a number of bits per modulation symbol according to a modulation order.

3. The method according to claim 1, further comprising setting a maximum number of RBs as the resources allocated for transmitting the determined UCI.

4. The method according to claim 1, further comprising determining a modulation order for transmitting the determined UCI based on the DCI format 4,

   wherein the modulation order is fixed as a Quadrature Phase Shift Keying, QPSK, or a 16-ary Quadrature Amplitude Modulation, 16QAM.

5. A User Equipment, UE, for transmitting only Uplink Control Information, UCI, without uplink data on a Physical Uplink Shared Channel, PUSCH, in a wireless access system supporting Carrier Aggregation, CA, of a plurality of component carriers, the plurality of component carriers comprising one primary component carrier and one or more secondary component carriers, the UE comprising;

   a reception module (2060);

   a transmission module (2040); and

   a processor (2020) configured to support transmission of only the UCI on the PUSCH,

   wherein the UE is adapted for receiving a Physical Downlink Control Channel, PDCCH, signal including Downlink Control Information, DCI, format 4 from a Base Station, BS, through the reception module (S2060), wherein the DCI format 4 is used for scheduling a PUSCH in multi-antenna port mode,
wherein the UE is further adapted for determining Channel State Information, CSI, of the one primary component carrier and a part of the one or more secondary component carriers as UCI to be transmitted, wherein the part of the one or more secondary component carriers is determined according to a number of information bits for the UCI to be transmitted,
wherein the UE is further adapted for allocating (S1910) resources for transmitting the determined UCI based on the DCI format 4, calculating (S1920) a number of code symbols for transmitting the determined UCI according to:

$$Q' = \min\left(\left\lceil \frac{O \cdot M_{sc}^{PUSCH} \cdot N_{symb}^{PUSCH} \cdot \beta_{offset}^{PUSCH}}{O_{CQI-MIN}} \right\rceil, 4 \cdot M_{sc}^{PUSCH}\right)$$

where O denotes a number of Hybrid Automatic Repeat reQuest Acknowledgment, HARQ-ACK, bits or Rank Indicator, RI, bits, $M_{sc}^{PUSCH}$ denotes a scheduled bandwidth for PUSCH transmission in a current subframe, $N_{symb}^{PUSCH}$ denotes a number of Single Carrier Frequency Division Multiplexing Access, SC-FDMA, symbols in the current subframe carrying the PUSCH, $\beta_{offset}^{PUSCH}$ denotes an offset value for PUSCH transmission, $O_{CQI-MIN}$ denotes a number of Channel Quality Indication, CQI, bits including Cyclic Redundancy Check, CRC, bits on an assumption of rank 1,
wherein the UE is further adapted for channel-encoding (S1930) the determined UCI based on the calculated number of code symbols, mapping (S1940) the channel-encoded UCI to the allocated resources, interleaving (S1950) the channel-encoded UCI by multiplexing the UCI without uplink data, through the processor (S2020),
wherein the UE is further adapted for transmitting (S1960) only the channel-encoded UCI without the uplink data on the PUSCH to the BS through the transmission module (S2040), and
wherein the part of the one or more secondary component carriers is determined in an ascending order of channel qualities of the one or more secondary component carriers, according to the number of information bits for the UCI to be transmitted.

6. The UE according to claim 5, wherein a number of Resource Blocks, RBs, as the resources allocated for transmitting the determined UCI is changed according to a modulation order, and
wherein the number of RBs is inversely proportional to a number of bits per modulation symbol according to a modulation order.

7. The UE according to claim 5, wherein the processor (S2020) is configured for setting a maximum number of RBs as the resources allocated for transmitting the determined UCI.

8. The UE according to claim 5, wherein the processor (S2020) is configured for determining a modulation order for transmitting the determined UCI based on the DCI format 4, and
wherein the modulation order is fixed as a Quadrature Phase Shift Keying, QPSK, or a 16-ary Quadrature Amplitude Modulation, 16QAM.

**Patentansprüche**

1. Verfahren zum Senden nur von Uplinksteuerinformationen, UCI, ohne Uplinkdaten auf einem Geteilten Physischen Uplinkkanal, PUSCH, in einem Drahtloszugangssystem mit Unterstützung für Trägeraggregation, CA, einer Mehrzahl von Komponententrägern, wobei die Mehrzahl von Komponententrägem einen primären Komponententräger und einen oder mehrere sekundäre Komponententräger umfasst, das Verfahren umfassend:

    Empfangen eines Physischen Downlinksteuerkanal-Signals, PDCCH-Signals, einschließlich Downlinksteuerinformationen, DCI, Format 4 von einer Basisstation, BS, wobei die DCI Format 4 zur Zeitplanung eines PUSCH im Mehrantennenanschluss-Modus verwendet werden;
    Bestimmen von Kanalstatusinformationen, CSI, des einen primären Komponententrägers und eines Teils der einen oder mehreren sekundären Komponententräger als zu sendende UCI, wobei der Teil der einen oder mehreren sekundären Komponententräger entsprechend einer Anzahl von Informationsbits für die zu sendenden UCI bestimmt wird;

Zuweisen (S1910) von Ressourcen zum Senden der bestimmten UCI auf der Grundlage der DCI Format 4;

Berechnen (S1920) einer Anzahl Q' von Codesymbolen zum Senden der bestimmten UCI nach folgender Formel:

$$Q' = \min\left(\left\lceil \frac{O \cdot M_{sc}^{PUSCH} \cdot N_{symb}^{PUSCH} \cdot \beta_{offset}^{PUSCH}}{O_{CQI-MIN}} \right\rceil, 4 \cdot M_{sc}^{PUSCH}\right)$$

wobei O für eine Anzahl von Hybride-Automatische-Wiederholungsanforderungs-Bestätigungs-Bits, HARQ-ACK-Bits, oder Rangfolge-Indikator-Bits, RI-Bits steht, $M_{sc}^{PUSCH}$ für eine zeitgeplante Bandbreite zur PUSCH-Übertragung in einem aktuellen Unterrahmen steht, $N_{symb}^{PUSCH}$ für eine Anzahl von Einzelträger-Frequenzmultiplex-Symbolen, SC-FDMA-Symbolen, in dem aktuellen, den PUSCH tragenden Unterrahmen steht, $\beta_{offset}^{PUSCH}$ für einen Versatzwert zur PUSCH-Übertragung steht, $O_{CQI\text{-}MIN}$ für eine Anzahl von Kanalqualitäts-Indikator-Bits, CQI-Bits, einschließlich Zyklische-Redundanzprüfungs-Bits, CRC-Bits, unter einer Annahme von Rangfolge 1 steht;

Kanalkodieren (S1930) der bestimmten UCI auf der Grundlage der berechneten Anzahl von Codesymbolen;

Abbilden (S1940) der kanalkodierten UCI auf die zugewiesenen Ressourcen;

Verschachteln (S1950) der kanalkodierten UCI durch Multiplexen der UCI ohne Uplinkdaten; und

Senden (S1960) nur der kanalkodierten UCI ohne Uplinkdaten auf dem PUSCH an die BS,

wobei der Teil der einen oder mehreren sekundären Komponententräger entsprechend der Anzahl der Informationsbits für die zu sendenden UCI in einer aufsteigenden Reihenfolge von Kanalqualitäten der einen oder mehreren sekundären Komponententräger bestimmt wird.

2. Verfahren nach Anspruch 1, wobei eine Anzahl von Ressourcenblöcken, RB, die als die zum Senden der bestimmten UCI zugewiesenen Ressourcen dienen, entsprechend einer Modulationsreihenfolge geändert wird und wobei die Anzahl von RB umgekehrt proportional zu einer Anzahl von Bits pro Modulationssymbol entsprechend einer Modulationsreihenfolge ist.

3. Verfahren nach Anspruch 1, ferner umfassend: Festlegen einer maximalen Anzahl von RB, die als die zum Senden der bestimmten UCI zugewiesenen Ressourcen dienen.

4. Verfahren nach Anspruch 1, ferner umfassend: Bestimmen einer Modulationsreihenfolge zum Senden der bestimmten UCI auf der Grundlage der DCI Format 4, wobei die Modulationsreihenfolge als eine Quadraturphasenumtastung, QPSK, oder eine 16er-Quadraturamplitudenmodulation, 16QAM, festgesetzt ist.

5. Benutzereinheit, UE, zum Senden nur von Uplinksteuerinformationen, UCI, ohne Uplinkdaten auf einem Geteilten Physischen Uplinkkanal, PUSCH, in einem Drahtloszugangssystem mit Unterstützung für Trägeraggregation, CA, einer Mehrzahl von Komponententrägern, wobei die Mehrzahl von Komponententrägern einen primären Komponententräger und einen oder mehrere sekundäre Komponententräger umfasst, die UE umfassend:

ein Empfangsmodul (2060);

ein Sendemodul (2040); und

einen Prozessor (2020), der dazu konfiguriert ist, das Senden nur der UCI auf dem PUSCH zu unterstützen,

wobei die UE angepasst ist zum Empfangen eines Physischen Downlinksteuerkanal-Signals, PDCCH-Signals, einschließlich Downlinksteuerinformationen, DCI, Format 4 von einer Basisstation, BS, über das Empfangsmodul (S2060), wobei die DCI Format 4 zur Zeitplanung eines PUSCH im Mehrantennenanschluss-Modus verwendet werden,

wobei die UE ferner angepasst ist zum Bestimmen von Kanalstatusinformationen, CSI, des einen primären Komponententrägers und eines Teils der einen oder mehreren sekundären Komponententräger als zu sendende UCI, wobei der Teil der einen oder mehreren sekundären Komponententräger entsprechend einer Anzahl von Informationsbits für die zu sendenden UCI bestimmt wird,

wobei die UE ferner angepasst ist zum Zuweisen (S1910) von Ressourcen zum Senden der bestimmten UCI auf der Grundlage der DCI Format 4, Berechnen (S1920) einer Anzahl von Codesymbolen zum Senden der bestimmten UCI nach folgender Formel:

$$Q' = \min\left(\left\lceil \frac{O \cdot M_{sc}^{PUSCH} \cdot N_{symb}^{PUSCH} \cdot \beta_{offset}^{PUSCH}}{O_{CQI-MIN}} \right\rceil, 4 \cdot M_{sc}^{PUSCH}\right)$$

wobei O für eine Anzahl von Hybride-Automatische-Wiederholungsanforderungs-Bestätigungs-Bits, HARQ-ACK-Bits, oder Rangfolge-Indikator-Bits, RI-Bits steht, $M_{sc}^{PUSCH}$ für eine zeitgeplante Bandbreite zur PUSCH-Übertragung in einem aktuellen Unterrahmen steht, $N_{symb}^{PUSCH}$ für eine Anzahl von Einzelträger-Frequenzmultiplex-Symbolen, SC-FDMA-Symbolen, in dem aktuellen, den PUSCH tragenden Unterrahmen steht, $\beta_{offset}^{PUSCH}$ für einen Versatzwert zur PUSCH-Übertragung steht, $O_{CQI-MIN}$ für eine Anzahl von Kanalqualitäts-Indikator-Bits, CQI-Bits, einschließlich Zyklische-Redundanzprüfungs-Bits, CRC-Bits, unter einer Annahme von Rangfolge 1 steht, wobei die UE ferner angepasst ist zum Kanalkodieren (S1930) der bestimmten UCI auf der Grundlage der berechneten Anzahl von Codesymbolen, Abbilden (S1940) der kanalkodierten UCI auf die zugewiesenen Ressourcen, Verschachteln (S1950) der kanalkodierten UCI durch Multiplexen der UCI ohne Uplinkdaten durch den Prozessor (S2020),
wobei die UE ferner angepasst ist zum Senden (S1960) nur der kanalkodierten UCI ohne Uplinkdaten auf dem PUSCH an die BS durch das Sendemodul (S2040), und
wobei der Teil der einen oder mehreren sekundären Komponententräger entsprechend der Anzahl der Informationsbits für die zu sendenden UCI in einer aufsteigenden Reihenfolge von Kanalqualitäten der einen oder mehreren sekundären Komponententräger bestimmt wird.

6. UE nach Anspruch 5, wobei eine Anzahl von Ressourcenblöcken, RB, die als die zum Senden der bestimmten UCI zugewiesenen Ressourcen dienen, entsprechend einer Modulationsreihenfolge geändert wird und
wobei die Anzahl von RB umgekehrt proportional zu einer Anzahl von Bits pro Modulationssymbol entsprechend einer Modulationsreihenfolge ist.

7. UE nach Anspruch 5, wobei der Prozessor (S2020) konfiguriert ist zum Festlegen einer maximalen Anzahl von RB, die als die zum Senden der bestimmten UCI zugewiesenen Ressourcen dienen.

8. UE nach Anspruch 5, wobei der Prozessor (S2020) konfiguriert ist zum Bestimmen einer Modulationsreihenfolge zum Senden der bestimmten UCI auf der Grundlage der DCI Format 4, und
wobei die Modulationsreihenfolge als eine Quadraturphasenumtastung, QPSK, oder eine 16er-Quadraturamplitudenmodulation, 16QAM, festgesetzt ist.

## Revendications

1. Procédé pour émettre seulement des informations de commande de liaison montante, UCI, sans données de liaison montante, sur un canal partagé de liaison montante physique, PUSCH, dans un système d'accès sans fil supportant une agrégation de porteuses, CA, d'une pluralité de porteuses composantes, la pluralité de porteuses composantes comprenant une porteuse composante primaire et une ou plusieurs porteuses composantes secondaires, le procédé comprenant ;
la réception d'un signal de canal physique de commande de liaison montante, PDCCH, incluant des informations de commande de liaison montante, DCI, format 4 en provenance d'une station de base, BS, où les DCI format 4 sont utilisées pour programmer l'émission d'un PUSCH en mode à ports d'antenne multiples ;
la détermination d'informations d'état de canal, CSI, de l'une porteuse composante primaire et d'une partie des une ou plusieurs porteuses composantes secondaires en tant qu'UCI destinées à être émises, dans lequel la partie des une ou plusieurs porteuses composantes secondaires est déterminée selon un nombre de bits d'informations pour les UCI destinées à être émises ;
l'attribution de ressources (S1910) pour émettre les UCI déterminées sur la base des DCI format 4 ;
le calcul (S1920) d'un nombre Q' de symboles de code pour émettre les UCI déterminées selon :

$$Q' = \min\left(\left\lceil \frac{O \cdot M_{sc}^{PUSCH} \cdot N_{symb}^{PUSCH} \cdot \beta_{offset}^{PUSCH}}{O_{CQI-MIN}} \right\rceil, 4 \cdot M_{sc}^{PUSCH}\right)$$

où $O$ dénote un nombre de bits d'accusé de réception de demande de répétition automatique hybride, HARQ-ACK, ou de bits d'indicateur de rang, RI, $M_{sc}^{PUSCH}$ dénote une largeur de bande programmée pour l'émission de PUSCH dans une sous-trame actuelle, $N_{symb}^{PUSCH}$ dénote un nombre de symboles d'accès à multiplexage par répartition en fréquence mono-porteuse, SC-FDMA, dans la sous-trame actuelle portant le PUSCH, $\beta_{offset}^{PUSCH}$ dénote une valeur de décalage pour émission de PUSCH, $O_{CQI-MIN}$ dénote un nombre de bits d'indication de qualité de canal, CQI, incluant des bits de contrôle de redondance cyclique, CRC, en supposant rang 1 ;
le codage canal (S1930) des UCI déterminées sur la base du nombre calculé de symboles de code ;
le mappage (S1940) des UCI encodées en canal sur les ressources attribuées ;
l'entrelacement (S1950) des UCI encodées en canal en multiplexant les UCI sans données de liaison montante ; et
l'émission (S1960) seule des UCI encodées par codage canal, sans les données de liaison montante, sur le PUSCH, vers la BS,
dans lequel la partie des une ou plusieurs porteuses composantes secondaires est déterminée en ordre ascendant de qualités de canal des une ou plusieurs porteuses composantes secondaires, selon le nombre de bits d'informations pour les UCI destinées à être émises.

2. Procédé selon la revendication 1, dans lequel un nombre de blocs de ressource, RB, en tant que ressources attribuées pour émettre les UCI déterminées, est changé selon un ordre de modulation, et
dans lequel le nombre de RB est inversement proportionnel à un nombre de bits par symbole de modulation selon un ordre de modulation.

3. Procédé selon la revendication 1, comprenant en outre le réglage d'un nombre maximum de RB en tant que ressources attribuées pour émettre les UCI déterminées.

4. Procédé selon la revendication 1, comprenant en outre la détermination d'un ordre de modulation pour émettre les UCI déterminées sur la base des DCI format 4,
dans lequel l'ordre de modulation est fixé sous forme de modulation par déplacement de phase en quadrature, QPSK, ou de modulation d'amplitude en quadrature à 16 états, 16QAM.

5. Équipement utilisateur, UE, pour émettre seulement des informations de commande de liaison montante, UCI, sans données de liaison montante, sur un canal partagé de liaison montante physique, PUSCH, dans un système d'accès sans fil supportant une agrégation de porteuses, CA, d'une pluralité de porteuses composantes, la pluralité de porteuses composantes comprenant une porteuse composante primaire et une ou plusieurs porteuses composantes secondaires, l'UE comprenant ;
un module de réception (2060) ;
un module d'émission (2040) ; et
un processeur (2020) configuré pour supporter l'émission seule des UCI sur le PUSCH,
dans lequel l'UE est adapté pour recevoir un signal de canal physique de commande de liaison montante, PDCCH, incluant des informations de commande de liaison montante, DCI, format 4 en provenance d'une station de base, BS, par l'intermédiaire du module de réception (S2060), dans lequel les DCI format 4 sont utilisées pour programmer l'émission d'un PUSCH en mode à ports d'antenne multiples,
dans lequel l'UE est en outre adapté pour déterminer des informations d'état de canal, CSI, de l'une porteuse composante primaire et une partie des une ou plusieurs porteuses composantes secondaires en tant qu'UCI destinées à être émises, dans lequel la partie des une ou plusieurs porteuses composantes secondaires est déterminée selon un nombre de bits d'informations pour les UCI destinées à être émises,
dans lequel l'UE est en outre adapté pour attribuer (S1910) des ressources pour émettre les UCI déterminées sur la base des DCI format 4, calculer (S1920) un nombre de symboles de code pour émettre les UCI déterminées selon :

$$Q' = \min\left(\left\lceil \frac{O \cdot M_{sc}^{PUSCH} \cdot N_{symb}^{PUSCH} \cdot \beta_{offset}^{PUSCH}}{O_{CQI-MIN}} \right\rceil, 4 \cdot M_{sc}^{PUSCH}\right)$$

où O dénote un nombre de bits d'accusé de réception de demande de répétition automatique hybride, HARQ-ACK, ou de bits d'indicateur de rang, RI, $M_{sc}^{PUSCH}$ dénote une largeur de bande programméée pour l'émission de PUSCH dans une sous-trame actuelle, $N_{symb}^{PUSCH}$ dénote un nombre de symboles d'accès à multiplexage par répartition en fréquence mono-porteuse, SC-FDMA, dans la sous-trame actuelle portant le PUSCH, $\beta_{offset}^{PUSCH}$ dénote une valeur de décalage pour émission de PUSCH, $O_{CQI-MIN}$ dénote un nombre de bits d'indication de qualité de canal, CQI, incluant des bits de contrôle de redondance cyclique, CRC, en supposant rang 1 ;

dans lequel l'UE est en outre adapté pour encoder en canal (S1930) les UCI déterminées sur la base du nombre calculé de symboles de code, mapper (S1940) les UCI encodées en canal sur les ressources attribuées, entrelacer (S1950) les UCI encodées en canal en multiplexant les UCI sans données de liaison montante, par l'intermédiaire du processeur (S2020),

dans lequel l'UE est en outre adapté pour émettre (S1960) seulement les UCI encodées en canal, sans les données de liaison montante, sur le PUSCH, à la BS, par l'intermédiaire du module de émission (S2040), et

dans lequel la partie des une ou plusieurs porteuses composantes secondaires est déterminée en ordre ascendant de qualités de canal des une ou plusieurs porteuses composantes secondaires, selon le nombre de bits d'informations pour les UCI destinées à être émises.

6. UE selon la revendication 5, dans lequel un nombre de blocs de ressource, RB, en tant que ressources attribuées pour émettre les UCI déterminées est changé selon un ordre de modulation, et
dans lequel le nombre de RB est inversement proportionnel à un nombre de bits par symbole de modulation selon un ordre de modulation.

7. UE selon la revendication 5, dans lequel le processeur (S2020) est configuré pour régler un nombre maximum de RB en tant que ressources attribuées pour émettre les UCI déterminées.

8. UE selon la revendication 5, dans lequel le processeur (S2020) est configuré pour déterminer un ordre de modulation pour émettre les UCI déterminées sur la base des DCI format 4, et
dans lequel l'ordre de modulation est fixé sous forme de modulation par déplacement de phase en quadrature, QPSK, ou de modulation d'amplitude en quadrature à 16 états, 16QAM.

# FIG. 1

Initial cell search — Receive system information — Random access procedure — General DL/UL Tx/Rx

S101: P/S - SCH & [DLRS] & PBCH

S102: PDCCH/ PDSCH (BCCH)

S103: PRACH

S104: PDCCH/ PDSCH

S105: PRACH

S106: PDCCH/ PDSCH

S107 / S108: PDCCH/ PDSCH / PUSCH PUCCH

- DL/UL ACK/NACK
- UE CQI/PMI/rank indication using PUSCH and PUCCH

FIG. 2

201     202     203     204     205

| Scrambling module | Modulation mapper | Conversion precoder | Resource element mapper | SC-FDMA signal generator |

# FIG. 3

## FIG. 4

- CP: Cyclic Prefix
- PS: Pulse Shaping
- M > N

Subcarrier mapping

$\{x_0, x_1 \ldots, x_{N-1}\}$ One block → **Serial-parallel converter** (401) → **N-point DFT module** (402) $\{X_k\}$ → **Subcarrier** (403) $\{\tilde{x}_t\}$ → **M-point IDFT module** (404) $\{\tilde{x}_m\}$ → **Parallel-serial converter** (405) → **CP atta-chment** (406) → $\{\tilde{x}_0, \tilde{x}_1 \ldots, \tilde{x}_{M-1}\}$ One block

SC - FDMA: ☐ + ▨

OFDMA: ☐

EP 2 744 163 B1

# FIG. 5

(a)

(b)

# FIG. 6

# FIG. 7

Normal CP

RS

1 SC-FDMA symbol

1 slot

1 subframe

(a)

Extended CP

RS

1 SC-FDMA symbol

1 slot

1 subframe

(b)

# FIG. 8

One component carrier
(e.g., 20MHz BW chunk)

e.g.) localized mapping
in one sub-block

Frequency
domain mapping

| Modulation symbol | → | DFT | → | DFT output | → |

Sub-block #0
Sub-block #1
Sub-block #2
Sub-block #3

Sub-block #0

Sub-block #1

Sub-block #2

Sub-block
#Nsb-1

IFFT →

Clustered DFT

# FIG. 9

One component carrier #0
(e.g., 20MHz BW chunk)

One component carrier #1
(e.g., 20MHz BW chunk)

e.g.) localized mapping
in one sub-block

Frequency
domain mapping

Sub-block #0

Sub-block #1

Sub-block #2

Sub-block #Nsb-1

Modulation symbol → DFT → DFT output → Sub-block #0 / Sub-block #1 / Sub-block #2 / Sub-block #3

IFFT

Clustered DFT

One component carrier
#Nsb-1 (e.g., 20MHz BW chunk)

EP 2 744 163 B1

# FIG. 10

One component carrier #0
(e.g., 20MHz BW chunk)

One component carrier #1
(e.g., 20MHz BW chunk)

e.g.) localized mapping
in one sub-block

Frequency
domain mapping

Sub-block #0 → IFFT → ⊗

exp(2*pi*f_0*t)

Modulation symbol → DFT → DFT output

Sub-block #0
Sub-block #1
Sub-block #2
Sub-block #3

Sub-block #1 → IFFT → ⊗

exp(2*pi*f_1*t)

Sub-block #2 → IFFT → ⊗

exp(2*pi*f_2*t)

Sub-block #Nsb-1 → IFFT → ⊗

exp(2*pi*f_Nsb-1)*t)

Clustered DFT

One component carrier
#Nsb-1 (e.g., 20MHz BW chunk)

EP 2 744 163 B1

FIG. 11

EP 2 744 163 B1

# FIG. 12

# FIG. 13

$a_0, a_1, ..., a_{A-1}$

| Transport block CRC attachment | — S1300 |

$b_0, b_1, ..., b_{B-1}$

| Code block segmentation code block CRC attachment | — S1310 |

$c_{r0}, c_{r1}, ..., c_{r(K_r-1)}$

| Channel coding | — S1320 |

$d_{r0}^{(i)}, d_{r1}^{(i)}, ..., d_{r(D_r-1)}^{(i)}$

| Rate matching | — S1330 |

$o_0, o_1, ..., o_{O-1}$

$[o_0^{RI}] or [o_0^{RI} o_1^{RI}]$

$[o_0^{ACK}] or [o_1^{ACK} o_1^{ACK}] or$
$[o_0^{ACK} o_1^{ACK} ... o_{O^{ACK}-1}^{ACK}]$

$e_{r0}, e_{r1}, ..., e_{r(E_r-1)}$

S1340 · S1350 · S1360 · S1370

| Code block concatenation | Channel coding | Channel coding | Channel coding |

$f_0, f_1, ..., f_{G-1}$

$q_0, q_1, ..., q_{Q_{CQI}-1}$

$q_0^{RI}, q_1^{RI}, ..., q_{Q_{RI}-1}^{RI}$

$[q_0^{ACK}, q_1^{ACK} ... q_{Q_{ACK}-1}^{ACK}]$

| Data and control information multiplexing |

S1380

$g_0, g_1, ..., g_{H-1}$

S1390

| Channel interleaver |

$h_0, h_1, ..., h_{H+Q_{RI}-1}$

# FIG. 14

# FIG. 15

Recognizing n_sch and related PMI for UL-SCH rank — S1510

Determining UCI rank (n_ctrl) (e.g., n_ctrl-n_sch) — S1520

multiplexing data and control channel — S1530

Channel interleaver — S1540

Modulation — S1550

# FIG. 16

EP 2 744 163 B1

FIG. 17

# FIG. 18

Virtual subcarrier

time

Copy

Copy

Copy

CW1 mapped to layer 2

CW1 mapped to layer 2

CW2 mapped to layer 3

CW2 mapped to layer 4

Data of CW1

Data of CW2

CQI

ACK / NAK

RI

# FIG. 19

```
┌─────────────────────────────────┐
│   Allocate resources and determine │ ─── S1910
│ modulation order based on DCI format 4 │
└─────────────────────────────────┘
                 │
                 ▼
┌─────────────────────────────────┐
│    Determine number of REs for UCI │ ─── S1920
└─────────────────────────────────┘
                 │
                 ▼
┌─────────────────────────────────┐
│        Channel-encode UCI          │ ─── S1930
└─────────────────────────────────┘
                 │
                 ▼
┌─────────────────────────────────┐
│       Map control information      │ ─── S1940
└─────────────────────────────────┘
                 │
                 ▼
┌─────────────────────────────────┐
│    Interleave channel information  │ ─── S1950
└─────────────────────────────────┘
                 │
                 ▼
┌─────────────────────────────────┐
│       Transmit UCI on PUSCH        │ ─── S1960
└─────────────────────────────────┘
```

# FIG. 20

UE

2000

2040 Tx module

2080 Memory

2060 Rx module

2020 Processor

BS

2010

2050 Tx module

2090 Memory

2070 Rx module

2030 Processor

EP 2 744 163 B1